# EUROPEAN PATENT APPLICATION

(11) **EP 4 697 322 A1**
(43) Date of publication of application: **18.02.2026**
(21) Application number: 24883970.6
(22) Date of filing: 25.06.2024
(51) Int. Cl.: G10L 15/22

(54) **VOICE ASSISTANT INTERACTION METHOD AND ELECTRONIC DEVICE**

(30) Priority: 31.10.2023 CN 202311439204
(71) Applicant: Huawei Technologies Co., Ltd., Shenzhen, Guangdong 518129 (CN)
(72) Inventor: HE, Zhenyi, Shenzhen, Guangdong 518129 (CN); XU, Qiang, Shenzhen, Guangdong 518129 (CN); LI, Chenhe, Shenzhen, Guangdong 518129 (CN); ZHANG, Nu, Shenzhen, Guangdong 518129 (CN); ZHOU, Yuxiao, Shenzhen, Guangdong 518129 (CN)
(74) Representative: Gill Jennings & Every LLP
(86) International application number: PCT/CN2024/101163
(87) International publication number: WO 2025/091960

(57) **Abstract**

A voice assistant interaction method and an electronic device are disclosed. The electronic device may determine, based on a device posture and a device action of the electronic device, whether to wake up a voice assistant. The device posture may be determined based on measurement data of a plurality of sensors of the electronic device, for example, measurement data of an IMU, measurement data of an ultrasonic signal, touch information of a capacitive screen, or measurement data of a proximity sensor. This lowers a probability that the voice assistant is accidentally woken up, and improves energy utilization efficiency of the electronic device. Both a sound pickup method and a feedback method performed by the electronic device may be determined based on the device posture of the electronic device, making a voice interaction process feel more intuitive for a user, and enhancing usability of the voice assistant.

## Description

This application claims priority to Chinese Patent Application No. 202311439204.0, filed with the China National Intellectual Property Administration on October 31, 2023 and entitled "VOICE ASSISTANT INTERACTION METHOD AND ELECTRONIC DEVICE", which is incorporated herein by reference in its entirety.

### TECHNICAL FIELD

This application relates to the field of terminal device software, and more specifically, to a voice assistant interaction method and an electronic device.

### BACKGROUND

Voice interaction is an important entry for human-computer interaction between a user and an electronic device. Power consumption, smoothness, usability, a response speed, an intelligence degree, and the like of voice interaction are important factors that affect whether the user uses a voice assistant and a use frequency of the voice assistant. How to control power consumption of the electronic device in a voice interaction process while improving usability of the voice assistant is a problem worth considering.

### SUMMARY

This application provides a voice assistant interaction method. An electronic device may determine, based on a device posture and a device action of the electronic device, whether to wake up a voice assistant, and use a sound pickup method and a feedback method tailored to the device posture of the electronic device. This lowers a probability that the voice assistant is accidentally woken up, reduces power consumption of the electronic device, makes a voice interaction process feel more intuitive for a user, and enhances usability of the voice assistant.

According to a first aspect, a voice interaction method is provided, applied to an electronic device. The method includes: detecting a target action of the electronic device, and determining that the electronic device is in a target posture, where the target posture includes a posture in which a lower microphone of the electronic device is close to a mouth of a user, and the target action includes an action used to convert the electronic device from a non-target posture to the target posture; displaying and/or playing first feedback information in response to the target posture of the electronic device, where the first feedback information indicates that a voice assistant is successfully woken up; recording a voice instruction through at least the lower microphone of the electronic device; and displaying and/or playing second feedback information in response to the voice instruction, where the second feedback information indicates an execution result of the voice instruction.

It should be understood that, before displaying and/or playing the first feedback information, the electronic device may start or invoke a voice assistant application, so that the application can interact with the user, for example, obtain a voice command of the user.

Before recording a sound of the user performing voice interaction, the electronic device first feeds back to the user that the voice assistant has been successfully woken up. A speaker of the electronic device does not need to be in an always-on state to record audio information, so that power consumption of the electronic device is lower in a process in which the user uses the voice assistant. In addition, when the mouth of the user is close to the lower microphone of the electronic device, the electronic device can set a voice instruction recording method to a method that tailors to a device posture, so that the electronic device can more clearly obtain the voice command of the user, to improve efficiency of invoking the voice assistant by the electronic device. From another perspective, implementation of the method also reduces power consumption of the electronic device during recording.

With reference to the first aspect, in some implementations of the first aspect, the target posture includes a posture in which the lower microphone is close to the mouth of the user and an ambient light sensor and/or a proximity sensor are/is not blocked. A prompt picture is displayed and/or a first prompt audio is played through a lower speaker of the electronic device in response to the target posture of the electronic device, where the first feedback information includes the prompt picture and/or the first prompt audio.

Herein, the target posture may also be referred to as a first posture.

In some scenarios, the posture in which the lower microphone is close to the mouth of the user and the ambient light sensor and/or the proximity sensor are/is not blocked may also be understood as a posture of the electronic device when the lower microphone of the electronic device is close to the mouth of the user and the user is not answering or making a call. In this posture, a side that is of the electronic device and on which a front-facing camera is disposed is away from a head of the user.

This technical solution specifically provides a method for sending feedback information to the user by the electronic device in the first posture. For the electronic device in the first posture, if the user is using the voice assistant, there is a high probability that the user is gazing at a screen of the electronic device. A manner of displaying the prompt picture through a display is more intuitive, and is more easily perceived by the user. Therefore, efficiency of sending the feedback information by the electronic device is higher. Similarly, when the mouth of the user is close to the lower microphone, the lower speaker of the electronic device is closer to the user, and playing a prompt audio through the lower speaker also helps the user perceive the feedback information. Therefore, efficiency of sending the feedback information by the electronic device is higher. In conclusion, implementation of the technical solution makes interaction between the user and the voice assistant feel more intuitive, enhances usability of the voice assistant, and increases a frequency of using the voice assistant by the user.

With reference to the first aspect, in some implementations of the first aspect, a first ultrasonic signal is sent in response to the target posture of the electronic device; a second ultrasonic signal returned based on the first ultrasonic signal is received; and when the second ultrasonic signal indicates that the electronic device is in the target posture, the prompt picture is displayed and/or the first prompt audio is played through the lower speaker of the electronic device.

The electronic device may determine, by sending an ultrasonic signal and recording a returned ultrasonic signal, whether the lower microphone of the electronic device is close to the mouth of the user. When the determining manner also indicates that the electronic device is in the posture in which the lower microphone is close to the mouth of the user, feedback information indicating that the voice assistant is successfully woken up is sent to the user. Because reliability of a result determined in an ultrasonic manner is higher, implementation of this technical solution lowers a probability that the voice assistant of the electronic device is accidentally woken up, and reduces power consumption of the electronic device caused by accidental wake-up of the voice assistant.

With reference to the first aspect, in some implementations of the first aspect, the first ultrasonic signal is sent through the lower speaker in response to the target posture of the electronic device; and the second ultrasonic signal is received through the lower microphone in response to the second ultrasonic signal returned when the first ultrasonic signal is in contact with the user.

In this technical solution, specifically, the lower speaker close to the mouth of the user is used to send the first ultrasonic signal, and the lower microphone close to the mouth of the user is used to record the second ultrasonic signal. This technical solution helps improve accuracy and reliability of an ultrasonic measurement result, and lowers the probability that the voice assistant is accidentally woken up, to reduce power consumption of the electronic device.

With reference to the first aspect, in some implementations of the first aspect, the target posture includes a posture in which the lower microphone of the electronic device is close to the mouth of the user and an ambient light sensor and/or a proximity sensor are/is blocked. A second prompt audio is played through an upper speaker of the electronic device in response to the target posture of the electronic device, where the first feedback information includes the second prompt audio.

Herein, the target posture may also be referred to as a second posture.

In some scenarios, the posture in which the lower microphone is close to the mouth of the user and the ambient light sensor and/or the proximity sensor are/is blocked may also be understood as a posture of the electronic device when the lower microphone of the electronic device is close to the mouth of the user and the user is answering or making a call. In this posture, a side that is of the electronic device and on which a front-facing camera is disposed is close to or in contact with a head of the user.

This technical solution specifically provides a method for sending feedback information to the user by the electronic device in the second posture. In a posture of answering or making a call, the display of the electronic device is close to an ear of the user, and the user cannot see information on the display of the electronic device. However, the upper speaker (or an earpiece) of the electronic device is close to the ear of the user, and a prompt audio is played through the upper speaker, so that the feedback information is perceived by the user. Therefore, efficiency of sending the feedback information by the electronic device is higher. Implementation of the technical solution makes interaction between the user and the voice assistant feel more intuitive, enhances usability of the voice assistant, and increases a frequency of using the voice assistant by the user.

With reference to the first aspect, in some implementations of the first aspect, touch information of the display of the electronic device is obtained in response to the target posture of the electronic device; and when the touch information indicates that the display of the electronic device is touched, the second prompt audio is played through the upper speaker of the electronic device.

With reference to the first aspect, in some implementations of the first aspect, the touch information includes information about an external pinna.

In a possible implementation, the touch information in this technical solution may include a capacitance value of the display of the electronic device.

The electronic device may determine, based on the touch information of the display, whether the electronic device is in the posture of answering or making a call. When determining that the electronic device is in the posture of answering or making a call, the electronic device sends, to the user, the feedback information indicating that the voice assistant is successfully woken up. Reliability of a result of determining the posture of the electronic device based on the touch information of the display is higher. Therefore, implementation of this technical solution lowers the probability that the voice assistant of the electronic device is accidentally woken up, and reduces power consumption of the electronic device caused by accidental wake-up of the voice assistant.

With reference to the first aspect, in some implementations of the first aspect, the voice instruction is recorded by using the lower microphone of the electronic device as a main recording unit and an upper microphone of the electronic device as an auxiliary recording unit.

The voice command recording method provided in this technical solution tailors to the device posture, and recording the voice command by using a plurality of microphones helps the electronic device more clearly obtain the voice command of the user, to improve efficiency of invoking the voice assistant by the electronic device.

With reference to the first aspect, in some implementations of the first aspect, before recording the voice instruction by using the lower microphone of the electronic device as the main recording unit and the upper microphone of the electronic device as the auxiliary recording unit, the method further includes: recording a first audio through the upper microphone and the lower microphone; and determining, based on the first audio, that the user speaks close to the lower microphone.

Because the electronic device in the target posture does not directly correspond to that the user is using or intends to use the voice assistant, it is determined, based on the upper microphone and the lower microphone of the electronic device, that the user is speaking close to the lower microphone of the electronic device. This helps improve accuracy of determining that the user intends to use the voice assistant, lowers the probability that the voice assistant is accidentally woken up, and reduces power consumption of the electronic device.

According to a second aspect, a voice assistant interaction method is provided, and is applied to an electronic device and includes: detecting a target action of the electronic device, and determining that the electronic device is in a target posture, where the target posture includes a posture in which an upper microphone of the electronic device is close to a mouth of a user, and the target action includes an action used to convert the electronic device from a non-target posture to the target posture; playing first feedback information in response to the target posture of the electronic device, where the first feedback information indicates that a voice assistant is successfully woken up; recording a voice instruction through at least the upper microphone of the electronic device; and playing second feedback information in response to the voice instruction, where the second feedback information indicates an execution result of the voice instruction.

It should be understood that, before playing the first feedback information, the electronic device may start or invoke a voice assistant application, so that the application can interact with the user, for example, obtain a voice command of the user.

Before recording a sound of the user performing voice interaction, the electronic device first feeds back to the user that the voice assistant has been successfully woken up. A speaker of the electronic device does not need to be in an always-on state to record audio information, so that power consumption of the electronic device is lower in a process in which the user uses the voice assistant. In addition, when the mouth of the user is close to the upper microphone of the electronic device, the electronic device can set a recording method to a method that tailors to a device posture, so that the electronic device can more clearly obtain the voice command of the user, to improve efficiency of invoking the voice assistant by the electronic device. From another perspective, implementation of the method also reduces power consumption of the electronic device during recording.

With reference to the second aspect, in some implementations of the second aspect, the first feedback information is played through an upper speaker of the electronic device in response to the target posture of the electronic device.

Herein, the target posture may also be referred to as a third posture.

This technical solution specifically provides a method for sending feedback information to the user by the electronic device in the third posture. For the electronic device in the third posture, if the user is using the voice assistant, there is a low probability that the user perceives a picture on a display of the electronic device. However, the upper speaker of the electronic device is close to the user, and playing a prompt audio through the upper speaker helps the user perceive the feedback information. Therefore, efficiency of sending the feedback information by the electronic device is higher. Implementation of the technical solution makes interaction between the user and the voice assistant feel more intuitive, enhances usability of the voice assistant, and increases a frequency of using the voice assistant by the user.

With reference to the second aspect, in some implementations of the second aspect, a first ultrasonic signal is sent in response to the target posture of the electronic device; a second ultrasonic signal returned based on the first ultrasonic signal is received; and when the second ultrasonic signal indicates that the electronic device is in the target posture, the first feedback information is played through the upper speaker of the electronic device.

The electronic device may determine, by sending an ultrasonic signal and recording a returned ultrasonic signal, whether the upper microphone of the electronic device is close to the mouth of the user. When the determining manner also indicates that the electronic device is in the posture in which the upper microphone is close to the mouth of the user, feedback information indicating that the voice assistant is successfully woken up is sent to the user. Because reliability of a result determined in an ultrasonic manner is higher, implementation of this technical solution lowers a probability that the voice assistant of the electronic device is accidentally woken up, and reduces power consumption of the electronic device caused by accidental wake-up of the voice assistant.

With reference to the second aspect, in some implementations of the second aspect, the first ultrasonic signal is sent through the upper speaker in response to the target posture of the electronic device; and the second ultrasonic signal is received through the upper microphone in response to the second ultrasonic signal returned when the first ultrasonic signal is in contact with the user.

In this technical solution, specifically, the upper speaker close to the mouth of the user is used to send the first ultrasonic signal, and the upper microphone close to the mouth of the user is used to record the second ultrasonic signal. This technical solution helps improve accuracy and reliability of an ultrasonic measurement result, and lowers the probability that the voice assistant is accidentally woken up, to reduce power consumption of the electronic device.

With reference to the second aspect, in some implementations of the second aspect, the voice instruction is recorded by using the upper microphone of the electronic device as a main recording unit and a lower microphone of the electronic device as an auxiliary recording unit.

The voice command recording method provided in this technical solution tailors to the device posture, and recording the voice command by using a plurality of microphones helps the electronic device more clearly obtain the voice command of the user, to improve efficiency of invoking the voice assistant by the electronic device.

With reference to the second aspect, in some implementations of the second aspect, before recording the voice command by using the upper microphone of the electronic device as the main recording unit and the lower microphone of the electronic device as the auxiliary recording unit, the method further includes: recording a first audio through the upper microphone and the lower microphone; and determining, based on the first audio, that the user speaks close to the upper microphone.

Because the electronic device in the target posture does not directly correspond to that the user is using or intends to use the voice assistant, it is determined, based on the upper microphone and the lower microphone of the electronic device, that the user is speaking close to the upper microphone of the electronic device. This helps improve accuracy of determining that the user intends to use the voice assistant, lowers the probability that the voice assistant is accidentally woken up, and reduces power consumption of the electronic device.

According to a third aspect, a voice assistant interaction apparatus is provided. The apparatus includes an obtaining module and a processing module. The processing module is configured to: detect a target action of the apparatus, and determine that the apparatus is in a target posture, where the target posture includes a posture in which a lower microphone of the apparatus is close to a mouth of a user, and the target action includes an action used to convert the apparatus from a non-target posture to the target posture; and display and/or play first feedback information in response to the target posture of the apparatus, where the first feedback information indicates that a voice assistant is successfully woken up. The obtaining module is configured to record a voice instruction through at least the lower microphone of the apparatus. The processing module is further configured to display and/or play second feedback information in response to the voice instruction, where the second feedback information indicates an execution result of the voice instruction.

With reference to the third aspect, in some implementations of the third aspect, the target posture includes a posture in which the lower microphone is close to the mouth of the user and an ambient light sensor and/or a proximity sensor are/is not blocked. The processing module is specifically configured to display a prompt picture and/or play a first prompt audio through a lower speaker of the apparatus in response to the target posture of the apparatus, where the first feedback information includes the prompt picture and/or the first prompt audio.

With reference to the third aspect, in some implementations of the third aspect, the processing module is specifically configured to send a first ultrasonic signal in response to the target posture of the apparatus. The obtaining module is further configured to: receive a second ultrasonic signal returned based on the first ultrasonic signal; and when the second ultrasonic signal indicates that the apparatus is in the target posture, display the prompt picture and/or play the first prompt audio through the lower speaker of the apparatus.

With reference to the third aspect, in some implementations of the third aspect, the processing module is further configured to send the first ultrasonic signal through the lower speaker in response to the target posture of the apparatus. The obtaining module is further configured to receive the second ultrasonic signal through the lower microphone in response to the second ultrasonic signal returned when the first ultrasonic signal is in contact with the user.

With reference to the third aspect, in some implementations of the third aspect, the target posture includes a posture in which the lower microphone of the apparatus is close to the mouth of the user and an ambient light sensor and/or a proximity sensor are/is blocked. The processing module is specifically configured to play a second prompt audio through an upper speaker of the apparatus in response to the target posture of the apparatus, where the first feedback information includes the second prompt audio.

With reference to the third aspect, in some implementations of the third aspect, the processing module is specifically configured to: obtain touch information of a display of the apparatus in response to the target posture of the apparatus; and when the touch information indicates that the display of the apparatus is touched, play the second prompt audio through the upper speaker of the apparatus.

With reference to the third aspect, in some implementations of the third aspect, the touch information includes information about an external pinna.

With reference to the third aspect, in some implementations of the third aspect, the obtaining module is specifically configured to record the voice instruction by using the lower microphone of the apparatus as a main recording unit and an upper microphone of the apparatus as an auxiliary recording unit.

With reference to the third aspect, in some implementations of the third aspect, before recording the voice instruction by using the lower microphone of the apparatus as the main recording unit and the upper microphone of the apparatus as the auxiliary recording unit, the obtaining module is further configured to record a first audio through the upper microphone and the lower microphone; and the processing module is further configured to determine, based on the first audio, that the user speaks close to the lower microphone.

According to a fourth aspect, a voice assistant interaction apparatus is provided. The apparatus includes an obtaining module and a processing module. The processing module is configured to: detect a target action of the apparatus, and determine that the apparatus is in a target posture, where the target posture includes a posture in which an upper microphone of the apparatus is close to a mouth of a user, and the target action includes an action used to convert the apparatus from a non-target posture to the target posture; and play first feedback information in response to the target posture of the apparatus, where the first feedback information indicates that a voice assistant is successfully woken up. The obtaining module is configured to record a voice instruction through at least the upper microphone of the apparatus. The processing module is further configured to play second feedback information in response to the voice instruction, where the second feedback information indicates an execution result of the voice instruction.

With reference to the fourth aspect, in some implementations of the fourth aspect, the processing module is specifically configured to play the first feedback information through an upper speaker of the apparatus in response to the target posture of the apparatus.

With reference to the fourth aspect, in some implementations of the fourth aspect, the processing module is further configured to send a first ultrasonic signal in response to the target posture of the apparatus. The obtaining module is further configured to receive a second ultrasonic signal returned based on the first ultrasonic signal. The processing module is further configured to play the first feedback information through the upper speaker of the apparatus when the second ultrasonic signal indicates that the apparatus is in the target posture.

With reference to the fourth aspect, in some implementations of the fourth aspect, the processing module is specifically configured to send the first ultrasonic signal through the upper speaker in response to the target posture of the apparatus. The obtaining module is specifically configured to receive the second ultrasonic signal through the upper microphone in response to the second ultrasonic signal returned when the first ultrasonic signal is in contact with the user.

With reference to the fourth aspect, in some implementations of the fourth aspect, the obtaining module is specifically configured to record the voice instruction by using the upper microphone of the apparatus as a main recording unit and a lower microphone of the apparatus as an auxiliary recording unit.

With reference to the fourth aspect, in some implementations of the fourth aspect, before recording the voice instruction by using the upper microphone of the apparatus as the main recording unit and the lower microphone of the apparatus as the auxiliary recording unit, the obtaining module is further configured to record a first audio through the upper microphone and the lower microphone; and the processing module is further configured to determine, based on the first audio, that the user speaks close to the upper microphone.

According to a fifth aspect, an electronic device is provided. The electronic device includes a processor and a memory, the memory is configured to store program instructions, and the processor is configured to: detect a target action of the electronic device, and determine that the electronic device is in a target posture, where the target posture includes a posture in which a lower microphone of the electronic device is close to a mouth of a user, and the target action includes an action used to convert the electronic device from a non-target posture to the target posture; display and/or play first feedback information in response to the target posture of the electronic device, where the first feedback information indicates that a voice assistant is successfully woken up; record a voice instruction through at least the lower microphone of the electronic device; and display and/or play second feedback information in response to the voice instruction, where the second feedback information indicates an execution result of the voice instruction.

With reference to the fifth aspect, in some implementations of the fifth aspect, the target posture includes a posture in which the lower microphone is close to the mouth of the user and an ambient light sensor and/or a proximity sensor are/is not blocked. The processor is further configured to display a prompt picture and/or play a first prompt audio through a lower speaker of the electronic device in response to the target posture of the electronic device, where the first feedback information includes the prompt picture and/or the first prompt audio.

With reference to the fifth aspect, in some implementations of the fifth aspect, the processor is specifically configured to: send a first ultrasonic signal in response to the target posture of the electronic device; receive a second ultrasonic signal returned based on the first ultrasonic signal; and when the second ultrasonic signal indicates that the electronic device is in the target posture, display the prompt picture and/or play the first prompt audio through the lower speaker of the electronic device.

With reference to the fifth aspect, in some implementations of the fifth aspect, the processor is specifically configured to: send the first ultrasonic signal through the lower speaker in response to the target posture of the electronic device; and receive the second ultrasonic signal through the lower microphone in response to the second ultrasonic signal returned when the first ultrasonic signal is in contact with the user.

With reference to the fifth aspect, in some implementations of the fifth aspect, the target posture includes a posture in which the lower microphone of the electronic device is close to the mouth of the user and an ambient light sensor and/or a proximity sensor are/is blocked. The processor is specifically configured to play a second prompt audio through an upper speaker of the electronic device in response to the target posture of the electronic device, where the first feedback information includes the second prompt audio.

With reference to the fifth aspect, in some implementations of the fifth aspect, the processor is specifically configured to: obtain touch information of a display of the electronic device in response to the target posture of the electronic device; and when the touch information indicates that the display of the electronic device is touched, play the second prompt audio through the upper speaker of the electronic device.

With reference to the fifth aspect, in some implementations of the fifth aspect, the touch information includes information about an external pinna.

With reference to the fifth aspect, in some implementations of the fifth aspect, the processor is further configured to record the voice instruction by using the lower microphone of the electronic device as a main recording unit and an upper microphone of the electronic device as an auxiliary recording unit.

With reference to the fifth aspect, in some implementations of the fifth aspect, before recording the voice instruction by using the lower microphone of the electronic device as the main recording unit and the upper microphone of the electronic device as the auxiliary recording unit, the processor is further configured to: record a first audio through the upper microphone and the lower microphone; and determine, based on the first audio, that the user speaks close to the lower microphone.

According to a sixth aspect, an electronic device is provided. The electronic device includes a processor and a memory, the memory is configured to store program instructions, and the processor is configured to: detect a target action of the electronic device, and determine that the electronic device is in a target posture, where the target posture includes a posture in which an upper microphone of the electronic device is close to a mouth of a user, and the target action includes an action used to convert the electronic device from a non-target posture to the target posture; play first feedback information in response to the target posture of the electronic device, where the first feedback information indicates that a voice assistant is successfully woken up; record a voice instruction through at least the upper microphone of the electronic device; and play second feedback information in response to the voice instruction, where the second feedback information indicates an execution result of the voice instruction.

With reference to the sixth aspect, in some implementations of the sixth aspect, the processor is specifically configured to play the first feedback information through an upper speaker of the electronic device in response to the target posture of the electronic device.

With reference to the sixth aspect, in some implementations of the sixth aspect, the processor is specifically configured to: send a first ultrasonic signal in response to the target posture of the electronic device; receive a second ultrasonic signal returned based on the first ultrasonic signal; and when the second ultrasonic signal indicates that the electronic device is in the target posture, play the first feedback information through the upper speaker of the electronic device.

With reference to the sixth aspect, in some implementations of the sixth aspect, the processor is specifically configured to: send the first ultrasonic signal through the upper speaker in response to the target posture of the electronic device; and receive the second ultrasonic signal through the upper microphone in response to the second ultrasonic signal returned when the first ultrasonic signal is in contact with the user.

With reference to the sixth aspect, in some implementations of the sixth aspect, the processor is specifically configured to record the voice instruction by using the upper microphone of the electronic device as a main recording unit and a lower microphone of the electronic device as an auxiliary recording unit.

With reference to the sixth aspect, in some implementations of the sixth aspect, before recording the voice instruction by using the upper microphone of the electronic device as the main recording unit and the lower microphone of the electronic device as the auxiliary recording unit, the processor is further configured to: record a first audio through the upper microphone and the lower microphone; and determine, based on the first audio, that the user speaks close to the upper microphone.

According to a seventh aspect, a computer program product is provided. The computer program product includes computer program code. When the computer program code is run on a computer, the method according to any one of the first aspect or the possible implementations of the first aspect or the method according to any one of the second aspect or the possible implementations of the second aspect is performed.

According to an eighth aspect, a computer-readable storage medium is provided. The computer-readable storage medium stores computer program code. When the computer program code is run on a computer, the method according to any one of the first aspect or the possible implementations of the first aspect or the method according to any one of the second aspect or the possible implementations of the second aspect is performed.

According to a ninth aspect, a chip is provided, and includes a processor, configured to read instructions stored in a memory. When the processor executes the instructions, the chip is enabled to implement the method according to any one of the first aspect or the possible implementations of the first aspect or the method according to any one of the second aspect or the possible implementations of the second aspect.

### BRIEF DESCRIPTION OF DRAWINGS

FIG. 1 is a diagram of a hardware architecture of an electronic device applicable to an embodiment of this application;
FIG. 2 is a diagram of a software architecture of an electronic device applicable to an embodiment of this application;
FIG. 3 shows a voice assistant interaction method according to an embodiment of this application;
FIG. 4 is diagrams of several device postures of an electronic device according to an embodiment of this application;
FIG. 5 shows another voice assistant interaction method according to an embodiment of this application;
FIG. 6 is a diagram of a structure of an electronic device according to an embodiment of this application;
FIG. 7 is a diagram of a method for determining, by an electronic device, whether a target action is detected according to an embodiment of this application;
FIG. 8 is a diagram of a method for detecting, by an electronic device, a distance between a microphone and a mouth of a user by using ultrasound according to an embodiment of this application;
FIG. 9 is a diagram of a method for sending feedback information by an electronic device according to an embodiment of this application;
FIG. 10 is a diagram of a method for determining a position relationship between a user and an electronic device by the electronic device according to an embodiment of this application;
FIG. 11 shows still another voice assistant interaction method according to an embodiment of this application;
FIG. 12 is a diagram of another method for determining, by an electronic device, whether a target action is detected according to an embodiment of this application;
FIG. 13 shows yet another voice assistant interaction method according to an embodiment of this application;
FIG. 14 is a diagram of still another method for determining, by an electronic device, whether a target action is detected according to an embodiment of this application;
FIG. 15 shows a voice assistant interaction apparatus according to an embodiment of this application; and
FIG. 16 shows an electronic device according to an embodiment of this application.

### DESCRIPTION OF EMBODIMENTS

The following describes technical solutions of this application with reference to accompanying drawings.

Terms used in the following embodiments are merely intended to describe specific embodiments, but are not intended to limit this application. Terms "one", "a", "the", "the foregoing", "this", and "the one" of singular forms used in this specification and the appended claims of this application are also intended to include plural forms such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment, but mean "one or more but not all of embodiments", unless otherwise specifically emphasized in another manner. Terms "include", "contain", "have", and their variants all mean "include but are not limited to", unless otherwise specifically emphasized in another manner.

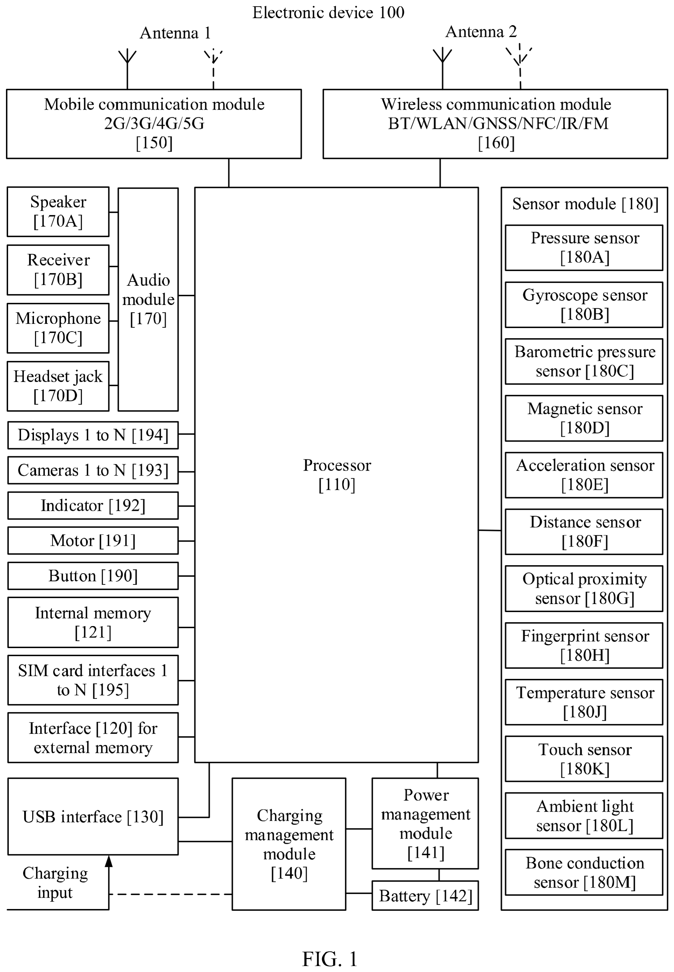

FIG. 1 is a diagram of a structure of an electronic device 100. The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, 12S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be configured to perform audio communication.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement an image shooting function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB Type-C interface, or the like. The USB interface 130 may be configured to connect to the charger to charge the electronic device 100, or may be configured to transmit data between the electronic device 100 and a peripheral device, or may be configured to connect to a headset for playing an audio through the headset. The interface may be further configured to connect to another electronic device like an AR device.

It may be understood that an interface connection relationship between the modules illustrated in embodiments of this application is merely an example for description, and does not constitute a limitation on the structure of the electronic device 100. In some other embodiments of this application, the electronic device 100 may alternatively use an interface connection manner different from that in the foregoing embodiments, or use a combination of a plurality of interface connection manners.

A wireless communication function of the electronic device 100 may be implemented through the antenna 1, the antenna 2, the mobile communication module 150, the wireless communication module 160, the modem processor, the baseband processor, and the like.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), and the like. In some embodiments, the electronic device 100 may include one or N displays 194, where N is a positive integer greater than 1.

The electronic device 100 may implement an image shooting function through the ISP, the camera 193, the video codec, the GPU, the display 194, the application processor, and the like. The ISP is configured to process data fed back by the camera 193. The camera 193 is configured to capture a static image or a video. The digital signal processor is configured to process a digital signal, and may process another digital signal in addition to a digital image signal. The video codec is configured to compress or decompress a digital video.

The NPU is a neural-network (neural-network, NN) computing processor, quickly processes input information by referring to a structure of a biological neural network, for example, by referring to a mode of transfer between human brain neurons, and may further continuously perform self-learning.

The interface 120 for external memory may be configured to connect to an external storage card, for example, a micro SD card, to extend a storage capability of the electronic device 100. The external storage card communicates with the processor 110 through the interface 120 for external memory, to implement a data storage function.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage component, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or a part of functional modules of the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

In some examples, the electronic device 100 may include one or more speakers 170A. When there are a plurality of speakers 170A, the plurality of speakers 170A may be distributed at different positions of the electronic device 100.

For example, at least one of the plurality of speakers 170A may be located on a same side of the display of the electronic device 100, and at least one of the plurality of speakers 170A may be located on an opposite side of the display of the electronic device 100.

For example, a direction in which a longer side of the electronic device 100 is located is a length direction, and a direction in which a shorter side of the electronic device 100 is located is a width direction. The plurality of speakers 170A may be distributed at two upper and lower opposite positions in the length direction of the electronic device 100 or two left and right opposite positions in the width direction of the electronic device 100. For example, a position at which a front-facing camera is disposed on the electronic device 100 is an upper part, and a position that is opposite to the upper part on a same surface and that is away from the front-facing camera is a lower part. The plurality of speakers 170A may include an upper speaker and a lower speaker. The upper speaker is located at the upper part of the electronic device 100, or is close to the front-facing camera of the electronic device 100. The lower speaker is located at the lower part of the electronic device 100, or is away from the front-facing camera of the electronic device 100.

It should be noted that the upper part and the lower part, upper and lower, and left and right are relative position relationships. The foregoing is merely an example for description, and should not be construed as a limitation on this application.

The receiver 170B, also referred to as an "earpiece", is configured to convert an audio electrical signal into a sound signal. When a call is answered or a voice message is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and recognize a sound source, so as to implement a directional recording function and the like.

When there are a plurality of microphones 170C, the plurality of microphones 170C may be distributed at different positions of the electronic device 100.

For example, at least one of the plurality of microphones 170C may be located on a same side of the display of the electronic device 100, and at least one of the plurality of microphones 170C may be located on an opposite side of the display of the electronic device 100.

For example, a direction in which a longer side of the electronic device 100 is located is a length direction, and a direction in which a shorter side of the electronic device 100 is located is a width direction. The plurality of microphones 170C may be distributed at two upper and lower opposite positions in the length direction of the electronic device 100 or two left and right opposite positions in the width direction of the electronic device 100. For example, a position at which a front-facing camera is disposed on the electronic device 100 is an upper part, and a position that is opposite to the upper part on a same surface and that is away from the front-facing camera is a lower part. The plurality of microphones 170C may include an upper microphone and a lower microphone. The upper microphone is located at the upper part of the electronic device 100, or is close to the front-facing camera of the electronic device 100. The lower microphone is located at the lower part of the electronic device 100, or is away from the front-facing camera of the electronic device 100.

It should be noted that the upper part and the lower part, upper and lower, and left and right are relative position relationships. The foregoing is merely an example for description, and should not be construed as a limitation on this application.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback.

The indicator 192 may be an indicator light, and may be configured to indicate a charging status and a power change, or may be configured to indicate a message, a missed call, a notification, and the like.

A software system of the electronic device 100 may use a layered architecture, an eventdriven architecture, a microkernel architecture, a micro service architecture, or a cloud architecture. In embodiments of this application, an Android system with a layered architecture is used as an example to describe a software structure of the electronic device 100.

It may be understood that an interface connection relationship between modules illustrated in embodiments of this application is merely an illustrative description, and does not constitute a limitation on a structure of the electronic device 100. In some other embodiments of this application, the electronic device 100 may alternatively use an interface connection manner different from that in the foregoing embodiments, or use a combination of a plurality of interface connection manners.

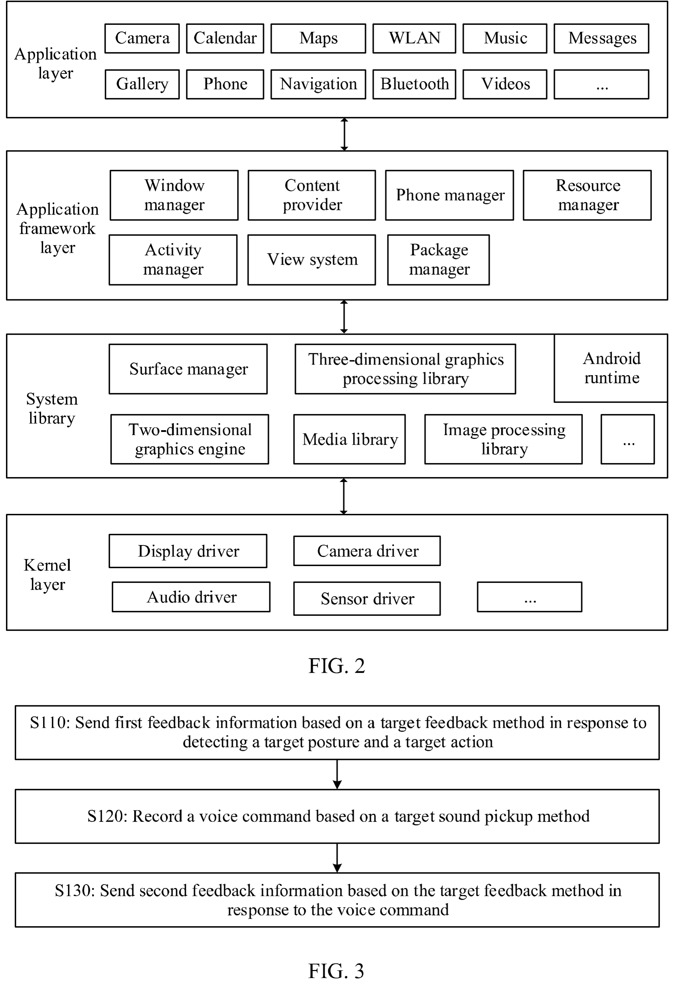

FIG. 2 is a block diagram of a software structure of the electronic device 100 according to an embodiment of this application. In a layered architecture, software is divided into several layers, and each layer has a clear role and task. The layers communicate with each other through a software interface. In some embodiments, the Android system is divided into four layers: an application (application, app) layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, an activity manager, a package manager, a resource manager, a view system, a phone manager, a notification manager, and the like.

The resource manager, also referred to as a resource manager service (resource manager service, RMS), provides various resources such as a localized character string, an icon, a picture, a layout file, and a video file for an application.

The window manager, also referred to as a window manager service (window manager service, WMS), is configured to manage a window program. The window manager may obtain a size of a display, determine whether there is a status bar, perform screen locking, take a screenshot, and the like.

The activity manager, also referred to as an activity manager service (activity manager service, AMS), manages all application processes in the system.

The package manager, also referred to as a package manager service (package manager service, PMS), is responsible for functions such as application installation and uninstallation, component query and matching, and permission management.

The view system includes a visual control, for example, a control for displaying a text and a control for displaying an image. The view system may be configured to construct an application. A display interface may include one or more views. For example, a display interface including an SMS message notification icon may include a text display view and an image display view.

The notification manager enables an application to display notification information in the status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of graph or scroll bar text, for example, a notification of an application running on a background, or may be a notification that appears on the screen in a form of dialog window. For example, text information is displayed in the status bar, an alert tone is made, the electronic device vibrates, or the indicator blinks.

The Android runtime includes a core library and a virtual machine, and is responsible for scheduling and management of the Android system.

The core library includes two parts: a function that needs to be called in Java language and a core library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

Before embodiments of this application are formally described, some terms that may be used in the following content are first described.

A K-nearest neighbors algorithm (k-nearest neighbors algorithm, kNN), also referred to as a nearest neighbor method, is a nonparametric statistical method used for classification and regression. This algorithm uses a vector space model for classification, with a concept that cases of same category are highly similar to each other, so that possible classification of cases of unknown categories can be evaluated by calculating a similarity to cases of known categories.

A support vector machine (support vector machine, SVM), also referred to as a support vector network, is a supervised learning model and a related learning algorithm for analyzing data in classification and regression analysis. In the SVM model, instances are represented as points in space. In this way, instances of an independent category are separated by a clear spacing as wide as possible. Then, new instances are mapped to same space, and a category to which the new instances belong is predicted based on a specific side of the spacing that the new instances fall.

A random forest is a classifier that contains a plurality of decision trees. An output category of the random forest is determined by the mode of output categories of individual trees.

A convolutional neural network (convolutional neural network, CNN) is a feedforward neural network, and artificial neurons of the convolutional neural network may respond to surrounding units within a part of a coverage range. The convolutional neural network excels at large image processing. At at least one layer of the convolutional neural network, a mathematical operation referred to as convolution is used instead of a general matrix multiplication.

A recurrent neural network (recurrent neural network, RNN) is an artificial neural network that uses sequence data or time series data, and may be used for sequential or temporal issues, for example, language translation, natural language processing, and speech recognition.

An autoencoder (autoencoder), also referred to as an automatic encoder, is an artificial neural network used to learn effective encoding of unlabeled data, and belongs to unsupervised learning. The autoencoder has two main components: an encoder, configured to encode an input, and a decoder, configured to reconstruct the input using encoding.

A chirp (chirp) signal is a signal whose frequency changes (increases or decreases) with time.

Automatic speech recognition (automatic speech recognition, ASR), also referred to as speech-to-text recognition or a speech recognition technology, aims to automatically convert human speech content into a response text by using a computer. Application of the speech recognition technology includes voice dialing, voice navigation, indoor device control, voice document retrieval, and the like.

A proximity sensor (proximity sensor) is a sensor that can detect a nearby object without contact. The proximity sensor usually emits an electromagnetic field or an electromagnetic radiation beam (for example, an infrared ray) and observes a change of an electric field or a returned signal to implement a function.

Voice interaction is an important method for human-computer interaction between a user and an electronic device. In a process in which the user interacts with a voice assistant, to improve voice interaction efficiency and reduce power consumption of the electronic device, this application provides a voice assistant interaction method. The following describes the method.

FIG. 3 is a flowchart of a voice assistant interaction method according to an embodiment of this application. Before recording a sound of a user performing voice interaction, an electronic device first feeds back to the user that a voice assistant has been successfully woken up. A manner of sending feedback information by the electronic device to the user tailors to a device posture of the electronic device. This makes an interaction process of the voice assistant feel more intuitive for a user, and enhances usability of the voice assistant.

S110: Send first feedback information based on a target feedback method in response to detecting a target posture and a target action.

Herein, the target action may be an action of converting the electronic device from a non-target posture to the target posture, and the target action may be completed through a user operation.

In some examples, the target posture may include a first posture, a second posture, or a third posture. The first posture is a posture in which a lower microphone of the electronic device is close to a mouth of the user and a display of the electronic device is not close to an ear of the user. The second posture is a posture in which the lower microphone of the electronic device is close to the mouth of the user and the display of the electronic device is close to the ear of the user. The third posture is a posture in which an upper microphone of the electronic device is close to the mouth of the user.

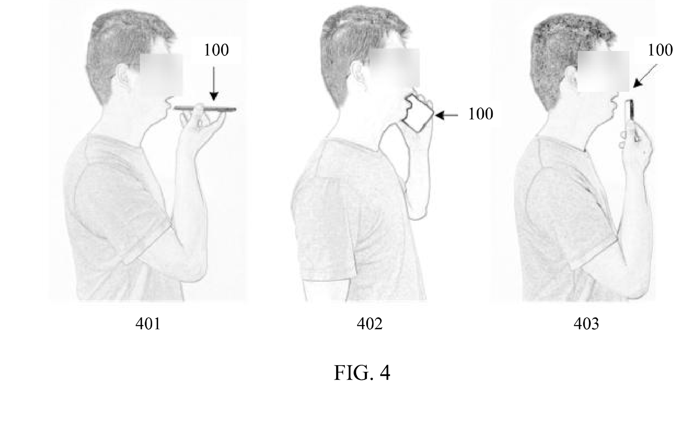

FIG. 4 is an example of diagrams of the first posture, the second posture, and the third posture. In FIG. 4, figure 401 on the left is a diagram of the first posture, figure 402 in the middle is a diagram of the second posture, and figure 403 on the right is a diagram of the third posture. It should be noted that FIG. 4 is merely an example description of the foregoing several postures for ease of understanding, and should not be considered as a limitation on embodiments of this application. In other words, the first posture, the second posture, and the third posture may alternatively be other postures than those shown in the diagrams in FIG. 4. This is not limited in embodiments of this application.

In some scenarios, the first posture may alternatively be understood as a posture in which the lower microphone of the electronic device is close to the mouth of the user and answering or making a call is not performed, or a posture of the electronic device when the lower microphone of the electronic device is close to the mouth of the user and an ambient light sensor and/or a proximity sensor are/is not blocked. The second posture may alternatively be understood as a posture in which the lower microphone of the electronic device is close to the mouth of the user and answering or making a call is performed, or a posture of the electronic device when the lower microphone of the electronic device is close to the mouth of the user and the ambient light sensor and/or the proximity sensor are/is blocked.

In some examples, the electronic device may obtain measurement data of one or more sensors of the electronic device, and the measurement data of these sensors may indicate the device posture and a device action of the electronic device. In other words, the electronic device may determine, based on the measurement data of the one or more sensors of the electronic device, whether the target posture or the target action is detected.

For example, the electronic device may determine, based on measurement data of a gravity sensor, whether the electronic device is in the first posture, the second posture, or the third posture. For example, the electronic device may determine components of a gravity acceleration on three axes of the electronic device based on the measurement data of the gravity sensor, determine included angles between the three axes of the electronic device and a horizontal plane based on the components of the gravity acceleration on the three axes, and determine the posture of the electronic device based on the included angles.

In some examples, before determining the device posture of the electronic device, the electronic device may further determine an acceleration of the electronic device based on measurement data of an inertial measurement unit (inertial measurement unit, IMU), and determine, based on the acceleration, whether the electronic device is in a relatively stable state. When the electronic device is in the relatively stable state, the electronic device determines the device posture of the electronic device.

In some examples, when the target posture and the target action are detected, the electronic device may verify, by using a target verification method, whether the electronic device is in the target posture, to lower a probability that the voice assistant is accidentally woken up or accidentally touched, and improve energy utilization efficiency of the electronic device.

For example, when the target posture includes the first posture or the third posture, the electronic device may send a first ultrasonic signal through a speaker, receive, through a microphone, a second ultrasonic signal returned based on the first ultrasonic signal, and verify, based on the recorded second ultrasonic signal and the sent first ultrasonic signal, whether the electronic device is in the target posture.

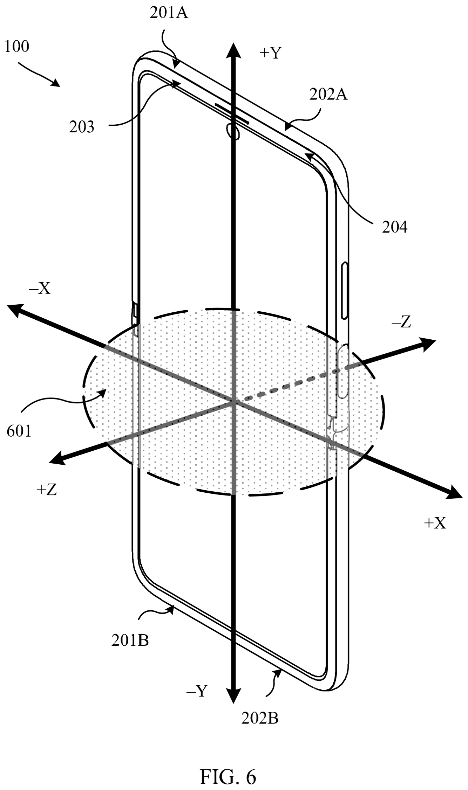

Herein, the speaker may be the speaker 170A of the electronic device 100, for example, an upper speaker or a lower speaker. The microphone may be the microphone 170C of the electronic device 100, for example, the upper microphone and the lower microphone. For specific descriptions of a speaker position or a microphone position of the electronic device, refer to related descriptions in FIG. 6 below. Details are not described herein.

For example, the electronic device detects, according to the foregoing method, that the electronic device is in the first posture. The electronic device may send the first ultrasonic signal through the lower speaker of the electronic device, record the second ultrasonic signal through the lower microphone of the electronic device, and verify, based on the first ultrasonic signal and the second ultrasonic signal, whether the electronic device is in the first posture.

For another example, the electronic device detects, according to the foregoing method, that the electronic device is in the third posture. The electronic device may send the first ultrasonic signal through the upper speaker of the electronic device, record the second ultrasonic signal through the upper microphone of the electronic device, and verify, based on the first ultrasonic signal and the second ultrasonic signal, whether the electronic device is in the third posture.

A method for verifying, by using a sent ultrasonic signal and a recorded ultrasound, whether the electronic device is in the target posture is specifically described in the following embodiments, and details are not described herein.

Power consumption of sending an ultrasound and recording an audio is higher than power consumption of the IMU and the gravity sensor, but accuracy of determining the posture of the electronic device based on measurement data of sending the ultrasound and recording the audio is higher. Verifying the posture of the electronic device by using the method helps control power consumption of the electronic device while improving accuracy of detecting the target posture, and reduces an accidental touch rate during use of the voice assistant.

Similarly, for example, when the target posture includes the second posture, the electronic device may obtain touch information of the display, and verify, based on the touch information, whether the electronic device is in the second posture.

In some examples, the touch information may include information about an external pinna of the user. For example, the touch information may include a capacitance value of the display of the electronic device, and the capacitance value may indicate the information about the external pinna of the user.

When the electronic device is in the second posture, the ear of the user is close to the display of the electronic device. Based on the touch information of the display of the electronic device, whether the ear of the user is close to the display of the electronic device may be determined, that is, whether the electronic device is in the second posture may be verified. A method for verifying, by using the touch information of the display, whether the electronic device is in the second posture is specifically described in the following embodiments, and details are not described herein.

Power consumption of obtaining the touch information of the display is higher than power consumption of the IMU and the gravity sensor, but accuracy of determining the posture of the electronic device based on measurement data of obtaining the touch information of the display is higher. Verifying the posture of the electronic device by using the method helps control power consumption of the electronic device while improving accuracy of detecting the target posture, and reduces an accidental touch rate during use of the voice assistant.

In some examples, when the target posture and the target action are detected, the electronic device may further verify, by reading measurement data of the proximity sensor and/or measurement data of the ambient light sensor, whether the electronic device is in the target posture. When the electronic device is in the first posture, the second posture, and the third posture, corresponding measurement values of the measurement data of the proximity sensor and the measurement data of the ambient light sensor are different. A method for verifying, by using the measurement data of the proximity sensor and/or the measurement data of the ambient light sensor, whether the electronic device is in the target posture is described in detail below, and details are not described herein.

In some examples, the electronic device may determine, with reference to a plurality of methods for determining and verifying the target posture, whether the electronic device is in the target posture, for example, with reference to the measurement data of the IMU and the ultrasonic signal, with reference to the measurement data of the IMU, the measurement data of the proximity sensor, and the touch information of the display, or with reference to the measurement data of the gravity sensor, the ultrasonic signal, the measurement data of the proximity sensor, and the measurement data of the ambient light sensor.

Determining, by using a plurality of methods and measurement data of a plurality of sensors of the electronic device, whether the electronic device is in the target posture lowers a probability that the voice assistant is accidentally touched during use, and helps improve energy utilization efficiency of the electronic device.

The first feedback information indicates that the voice assistant is successfully woken up. Methods for sending the first feedback information by the electronic device may be different when the electronic device is in different postures. In other words, a target feedback method for sending the first feedback information may be determined based on the device posture (namely, the target posture) of the electronic device.

In some examples, the target posture may include the first posture, and the first feedback information may be a prompt picture and/or a first prompt audio. The electronic device may display the prompt picture through the display and/or play the first prompt audio through the speaker. The prompt picture and/or the first prompt audio indicate/indicates that the voice assistant is successfully woken up. For example, the electronic device may play the first prompt audio through the lower speaker.

In some examples, the target posture may include the second posture, and the first feedback information may be a second prompt audio. The electronic device may play the second prompt audio through the speaker. The second prompt audio may indicate that the voice assistant is successfully woken up. For example, the electronic device may play the second prompt audio through the upper speaker.

In some examples, the target posture may include the third posture, and the first feedback information may be the first prompt audio. The electronic device may play the first prompt audio through the speaker. The first prompt audio may indicate that the voice assistant is successfully woken up. For example, the electronic device may play the first prompt audio through the upper speaker.

A method for sending the first feedback information may adapt to different postures of the electronic device. In other words, the method for sending the first feedback information is more intuitive and more conforms to an operation habit of the user. This feedback manner makes it more intuitive for the user to perform a human-computer interaction process by using the voice assistant.

It should be understood that the electronic device may alternatively send the first feedback information in more other manners, for example, one or more of vibration, display light effect, and flash light effect. This is not limited in this application.

S120: Record a voice command based on a target sound pickup method.

The voice command starts to be recorded after feedback information is sent, and the microphone of the electronic device does not need to be in an always-on state. This reduces power consumption of the electronic device, and improve energy utilization efficiency of the electronic device, and also lowers a probability that the voice assistant is accidentally woken up, making an interaction process between the user and the voice assistant feel more intuitive.

The target sound pickup method is a method or a policy for recording the voice command by the electronic device. The target sound pickup method may be determined based on the target posture of the electronic device in S110.

In some examples, the target posture includes the first posture or the second posture, and the target sound pickup method may be recording the voice command through at least the lower microphone of the electronic device. For example, the voice command is recorded by using the lower microphone of the electronic device as a main recording unit and the upper microphone of the electronic device as an auxiliary recording unit.

In some examples, the target posture includes the third posture, and the target sound pickup method may be recording the voice command through at least the upper microphone of the electronic device. For example, the voice command is recorded by using the upper microphone of the electronic device as a main recording unit and the lower microphone of the electronic device as an auxiliary recording unit.

For example, herein, the auxiliary recording unit may be configured to perform noise reduction on an audio recorded by the main recording unit.

The target sound pickup method is determined based on the device posture of the electronic device. This helps improve accuracy of the voice command recorded by the electronic device, helps improve efficiency of executing a voice instruction of the user by the voice assistant, and also helps improve energy utilization efficiency of the electronic device to an extent.

S130: Send second feedback information based on the target feedback method in response to the voice command.

The electronic device may determine, based on the recorded voice command, a voice command sent by the user, and convert the voice command into text information through automatic speech recognition. The electronic device may invoke, based on the text information, the voice assistant to complete a command indicated by the text information.

Herein, a method for sending the second feedback information, namely, the target feedback method, may be determined based on the device posture of the electronic device.

In some examples, the target posture may include the first posture, and the second feedback information may be a result prompt picture and/or a result prompt audio. The electronic device may display the result prompt picture through the display and/or play the result prompt audio through the speaker. The result prompt picture and/or the result prompt audio indicate/indicates an execution result of the voice command. For example, the electronic device may play the result prompt audio through the lower speaker.

In some examples, the target posture may include the second posture, and the second feedback information may be the result prompt audio. The electronic device may play the result prompt audio through the speaker. The result prompt audio may indicate an execution result of the voice command. For example, the electronic device may play the result prompt audio through the upper speaker.

In some examples, the target posture may include the third posture, and the second feedback information may be the result prompt audio. The electronic device may play the result prompt audio through the speaker. The result prompt audio may indicate an execution result of the voice command. For example, the electronic device may play the result prompt audio through the speaker.

It should be understood that the execution result herein may include a result of successful execution, or may include a result of unsuccessful execution or a result of execution failure. In addition, the execution result may alternatively be an execution result of indicating to stop or pause voice assistant interaction when the electronic device cannot detect a voice of the user within preset duration.

The method for sending the second feedback information may tailor to different postures of the electronic device. In other words, the method for sending the second feedback information is more intuitive and more conforms to an operation habit of the user. This feedback manner helps make it more intuitive for the user to perform a human-computer interaction process by using the voice assistant.

It should be understood that the electronic device may alternatively send the second feedback information in more other manners, for example, one or more of vibration, display light effect, flash light effect, and indicator light effect. This is not limited in this application.

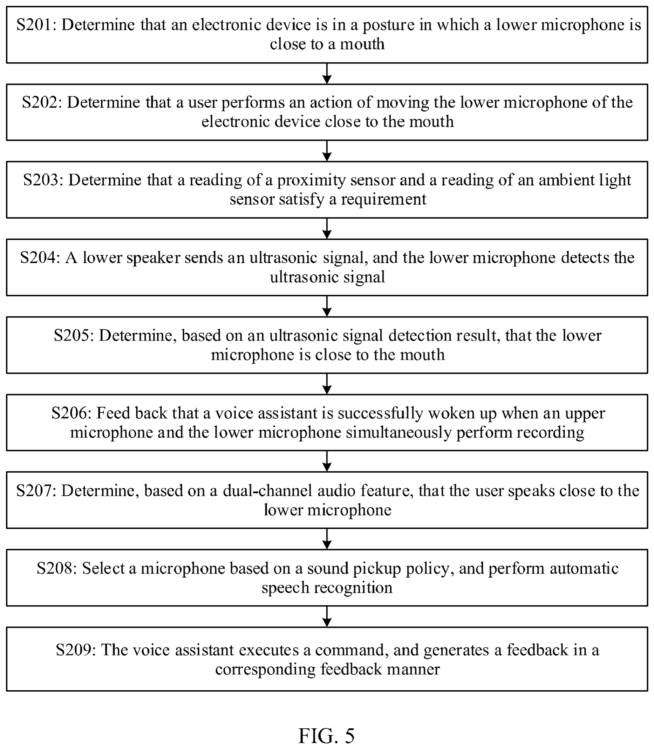

An electronic device may use different wake-up solutions, sound pickup solutions, and feedback solutions for different device postures. As shown in FIG. 5, in a case in which a lower microphone of the electronic device is close to a mouth of a user and answering or making a call is not performed (the posture of the electronic device 100 in figure 401), the electronic device may perform the following interaction solution.

S201: Determine that the electronic device is in a posture in which the lower microphone is close to the mouth of the user.

In some examples, in a relatively stable state, the electronic device determines whether the electronic device is in the posture in which the lower microphone is close to the mouth of the user.

Whether the electronic device is in the relatively stable state may be determined based on one or more sensors on the electronic device.

For example, the electronic device may determine, based on measurement data of an IMU, whether the electronic device is in the relatively stable state. For example, the electronic device may determine a value of a current acceleration of the electronic device based on the measurement data of the IMU. When the acceleration of the electronic device is less than or equal to an acceleration threshold, the electronic device may determine that the electronic device is in the relatively stable state. On the contrary, when the acceleration of the electronic device is greater than the acceleration threshold, the electronic device may determine that the electronic device is in a motion state.

It should be noted that the relatively stable state herein may also be understood as a relatively static state, and the stable state, the static state, and the motion state are all relative descriptions.

In some examples, the posture of the electronic device may be determined based on the one or more sensors on the electronic device.

For example, the electronic device may determine the device posture of the electronic device based on measurement data of a gravity sensor. For example, the electronic device may determine components of a gravity acceleration of the electronic device on three axes of the electronic device based on the measurement data of the gravity sensor, and determine included angles between the three axes of the electronic device and a horizontal plane based on the components of the gravity acceleration on the three axes, where the included angles may indicate the device posture of the electronic device. For ease of description, in the following content, "the electronic device is in a posture in which the lower microphone is close to the mouth of the user and is not in a state of answering or making a call" is referred to as a first target posture.

A three-dimensional diagram of the electronic device shown in FIG. 6 is used as an example. The three axes of the electronic device may be respectively referred to as an x-axis, a y-axis, and a z-axis. An x-axis direction may be considered as a width direction of the electronic device, a y-axis direction may be considered as a height direction of the electronic device, and a z-axis direction may be considered as a thickness direction of the electronic device. A quadrilateral area 601 in FIG. 6 may be considered as a horizontal plane, and the included angles between the x-axis, the y-axis, and the z-axis of the electronic device and the horizontal plane may be respectively referred to as a first included angle (α1), a second included angle (α2), and a third included angle (α3).

The electronic device 100 may include an upper microphone 201A, a lower microphone 201B, an upper speaker 202A, a lower speaker 202B, a proximity sensor 203, and an ambient light sensor 204. In FIG. 6, the upper microphone 201A, the upper speaker 202A, the proximity sensor 203, and the ambient light sensor 204 may all be located in an upper part of the electronic device 100, namely, an area of the electronic device in a positive y-axis direction. The lower microphone 201B and the lower speaker 202B may be located in a lower part of the electronic device 100, namely, an area of the electronic device in a negative y-axis direction.

It should be understood that position distribution of the plurality of electronic components of the electronic device 100 in FIG. 6 is merely an example. This is not limited in this application.

In some examples, when the first included angle, the second included angle, and the third included angle all satisfy a preset condition, the electronic device may determine that the electronic device is in the first target posture. On the contrary, when any one of the first included angle, the second included angle, and the third included angle does not satisfy the preset condition, the electronic device may determine that the electronic device is not in the first target posture.

S202: Determine that the user performs an action of moving the lower microphone of the electronic device close to the mouth.

To improve accuracy of determining, by the electronic device, that the user intends to wake up a voice assistant, lower a probability that the voice assistant of the electronic device is accidentally woken up, and reduce a power consumption increase caused by using the voice assistant, when it is determined that the electronic device is in the first target posture, the electronic device may determine whether the electronic device changes from a non-first target posture to the first target posture. In other words, the electronic device may determine whether the user adjusts the electronic device from the non-first target posture to the first target posture. For ease of description, an action of "adjusting the electronic device from the non-first target posture to the first target posture" is referred to as a first target action below.

In some examples, the electronic device may store data of a sensor within a period of time, and determine, based on the data of the sensor within the period of time, whether the user performs the first target action. For example, the electronic device may continuously store the measurement data of the IMU within specific duration (for example, 2 seconds or 1 second), and determine, based on the measurement data of the IMU within the duration, whether the user performs the first target action.

For example, based on the measurement data of the IMU within the duration range, the electronic device may determine, by using a machine learning-based classification algorithm and/or a rule-based determining algorithm, whether the user performs the first target action.

The machine learning-based classification algorithm may include one or more of a conventional machine learning method like a nearest neighbors algorithm, a support vector machine, or a random forest, a deep learning method like a convolutional neural network or an autoencoder, and the like.

In some examples, the electronic device obtains a probability value of "detecting the first target action" by using one or more of the foregoing classification algorithms. When the probability value is greater than or equal to a preset threshold, the electronic device determines that the user performs the first target action, and continues to perform S203 and subsequent operations. When the probability value is less than the preset threshold, the electronic device determines that the user does not perform the first target action, and may restart to perform S201.

For the rule-based determining algorithm, in some examples, the electronic device may first classify an action into a large-range motion and a small-range motion based on a value of an acceleration and motion time. For example, the large-range motion may be that the electronic device is picked up from a desktop or a pocket of trousers to the mouth, and the small-range motion may be that the electronic device is rotated by a specific angle from a position close to a face, so that the lower microphone of the electronic device is close to the mouth of the user.

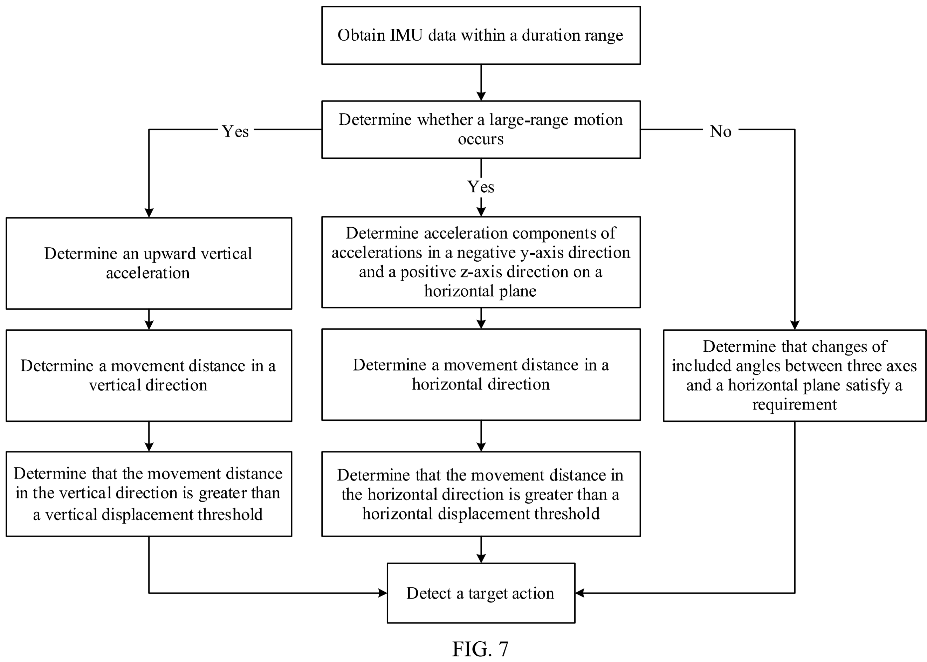

For example, the electronic device may determine a displacement of the electronic device based on the acceleration and the motion time. When the displacement is greater than or equal to a displacement threshold, it is determined that the large-range motion occurs. When the displacement is less than the displacement threshold, it is determined that the small-range motion occurs. For different motion statuses, the electronic device may use different methods to determine whether the first target action is detected. FIG. 7 shows a determining method according to this application.

For the large-range motion, at a vertical upward motion distance, an action of "lifting up", for example, lifting the electronic device from a position near a thigh of the user to the mouth, can be recognized. At a motion distance in a horizontal direction, an action of "pulling the electronic device towards the user" or an action of moving the electronic device from a position away from the user to a position close to the user, for example, moving the electronic device from a position that is on a desktop in front of the user and that is away from the user to a position close to the user, can be recognized.

In some examples, when the large-range motion occurs, the electronic device may determine, based on a displacement component of the electronic device in a gravity direction or a displacement component of the electronic device in the horizontal direction, whether the electronic device detects the first target action.

For example, the electronic device may determine a component of the acceleration in the gravity direction based on an included angle between an acceleration direction of the electronic device and the gravity direction, and may obtain a movement distance of the electronic device in the gravity direction by performing quadratic integration on an acceleration in the gravity direction within the motion time. When the movement distance in the gravity direction is greater than or equal to a vertical displacement threshold, the electronic device determines that the first target action is detected. When the movement distance in the gravity direction is less than the vertical displacement threshold, the electronic device determines that the first target action is not detected.

Similarly, for example, the electronic device may determine a first horizontal-plane acceleration component and a second horizontal-plane acceleration component of the electronic device on the horizontal plane based on accelerations of the electronic device in the negative y-axis direction and a positive z-axis direction, determine a composite acceleration of the electronic device on the horizontal plane based on the first horizontal-plane acceleration component and the second horizontal-plane acceleration component, and obtain a movement distance of the electronic device on the horizontal plane by performing quadratic integration on the composite acceleration within the motion time. When the movement distance on the horizontal plane is greater than or equal to a horizontal displacement threshold, the electronic device determines that the first target action is detected. When the movement distance on the horizontal plane is less than the horizontal displacement threshold, the electronic device determines that the first target action is not detected.

Herein, because the negative y-axis direction and the positive z-axis direction of the electronic device usually point to the user, only accelerations in the negative y-axis direction and the positive z-axis direction may be considered when a movement distance in the horizontal direction is calculated.

For the small-range motion, an action may be recognized based on changes of the included angles between the three axes of the electronic device and the horizontal plane. An angle change amplitude should be within a specific range. In some examples, because a process of rotating the electronic device close to the mouth of the user usually does not include a reciprocating motion, the change of the included angle between the y-axis and the horizontal plane and the change of the included angle between the x-axis and the horizontal plane are monotonically increasing or monotonically decreasing.

In some examples, when the small-range motion occurs, the electronic device may determine, based on the included angles (the first included angle α1, the second included angle α2, and the third included angle α3) between the three axes of the electronic device and the horizontal plane in a motion process, whether the target action is detected.

For example, the electronic device may determine a first angle change value (β1) corresponding to α1, a second angle change value (β2) corresponding to α2, and a third angle change value (β3) corresponding to α3 in the motion process of the electronic device, and the electronic device may determine, based on the first angle change value, the second angle change value, and the third angle change value, whether the target action is detected. For ease of description, a first angle threshold (δ1), a second angle threshold (δ2), and a third angle threshold (δ3) respectively represent angle thresholds corresponding to β1, β2, and β3.

For example, when β1≤δ1, β2≤δ2, and β3≤δ3, the electronic device may determine that the first target action is detected; otherwise, the electronic device may determine that the first target action is not detected.

Similarly, for example, the electronic device may continuously record the first included angle and the second included angle in the motion process of the electronic device, to determine a first angle increment (γ1) of the first included angle and a second angle increment (γ2) of the second included angle at different moments. The electronic device may determine, based on a plurality of first angle increments and a plurality of second angle increments at different moments in the motion process, whether the target action is detected.

For example, in the motion process, if all γ1 are positive values or negative values, and all γ2 are positive values or negative values, the electronic device may determine that the first target action is detected; otherwise, the electronic device may determine that the first target action is not detected.

Still for example, the electronic device may alternatively determine, based on the foregoing two determining manners, whether the target operation is detected. To be specific, whether the target action is detected is determined based on the first angle change value, the second angle change value, and the third angle change value that correspond to a start moment and an end moment of the motion, and the plurality of first angle increments and the plurality of second angle increments at different moments in the motion process.

For example, if β1≤δ1, β2≤δ2, β3≤δ3, all γ1 are positive values or negative values, and all y2 are positive values or negative values, the electronic device may determine that the first target action is detected; otherwise, the electronic device may determine that the first target action is not detected.

S203: Determine that measurement data of a proximity sensor and measurement data of an ambient light sensor satisfy a requirement.

When the lower microphone of the electronic device is close to the mouth of the user and answering or making a call is not performed, an upper part of the electronic device is not blocked. In this case, a distance determined based on the measurement data of the proximity sensor of the electronic device is greater than or equal to a distance threshold, that is, the measurement data of the proximity sensor does not indicate that the upper part of the electronic device is blocked. Illuminance determined based on the measurement of the ambient light sensor is generally greater than or equal to an illuminance threshold. In other words, when both a reading of the proximity sensor and the measurement data of the ambient light sensor satisfy the foregoing preset condition, there is a higher probability that the electronic device is in the first target posture. On the contrary, if one or two of the detection data of the proximity sensor and the measurement data of the ambient light sensor do not satisfy the preset condition, there is a lower possibility that the electronic device is in the first target posture. For example, in this case, the electronic device may be in a pocket or a handbag.

When it is determined that the measurement data of the proximity sensor and the measurement data of the ambient light sensor satisfy the requirement, the electronic device may perform S204 and subsequent operations. When it is determined that the measurement data of the proximity sensor and/or the measurement data of the ambient light sensor do/does not satisfy the requirement, the electronic device may re-perform the operation of S201.

S204: A lower speaker of the electronic device sends an ultrasonic signal, and the lower microphone detects the ultrasonic signal.

When it is determined that the electronic device is in the first target posture, and the electronic device detects the first target action, the electronic device may perform S204, that is, control the lower speaker to send the ultrasonic signal, and control the lower microphone to detect the ultrasonic signal.

When it is determined that the electronic device is not in the first target posture, or when the electronic device does not detect the first target action, the electronic device may re-perform the operation in S201.

S205: Determine a distance between the lower microphone and the mouth of the user, and obtain feature information of the mouth of the user.

A current distance between the lower microphone of the electronic device and the mouth of the user is determined based on a result of detecting the ultrasonic signal by the lower microphone in S204, and the feature information of the mouth of the user is obtained. Because distances between different points of the mouth of the user and the microphone are different, different points have different effects on reflection, absorption, or the like of the ultrasonic signal. After the ultrasonic signal is reflected by the mouth of the user, the information is included in an audio clip of a microphone mobile phone. In other words, the feature information of the mouth of the user may mean that a spectrum graph of the ultrasonic signal detected by the microphone after the ultrasonic signal is blocked and reflected by the mouth of the user includes the feature information of the mouth of the user.

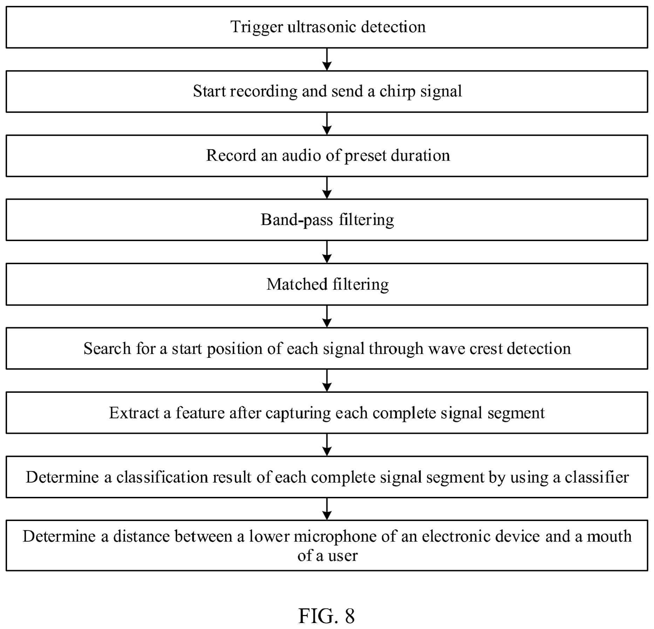

FIG. 8 shows a processing manner of determining a device posture of an electronic device by using an ultrasonic signal according to an embodiment of this application.

The electronic device sends a chirp signal of a preset frequency and preset duration, records an audio of specific duration, performs filtering processing on the recorded audio, and captures a spectrum graph of an audio clip in the recorded audio as an input of a classifier. An output result of the classifier may be used to determine a distance between a lower microphone of the electronic device and a mouth of a user. Herein, the classifier may be an RNN, a CNN, an SVM, or the like.

Specifically, in some examples, the electronic device may generate a chirp signal of 0.02s whose frequency range is 18 kHz to 23 kHz, and send the chirp signal of 0.2s at a time interval of 0.02s. The electronic device may record an audio of 100 ms, and apply band-pass filtering of 18 kHz to 23 kHz to a recorded audio signal. Matched filtering is performed by using the original chirp signal and the recorded audio signal, and a largest position in a result of the matched filtering may be considered as a start position of the chirp signal. An audio clip of 0.02s is captured from a start position in the recorded audio, and a spectrum graph of the captured audio clip is calculated by using short-time Fourier transform or fast Fourier transform and is used as an input of the classifier. The classifier may determine a classification result of each complete signal segment based on the input, and the classification result may be used to determine the distance between the lower microphone and the mouth of the user.

When it is determined, by using the ultrasonic signal, that the lower microphone of the electronic device is close to the mouth of the user, the electronic device may perform S206, that is, after a voice assistant application is started, feed back that the voice assistant is successfully woken up. On the contrary, if the ultrasonic signal does not indicate that the lower microphone of the electronic device is close to the mouth of the user, the electronic device may re-perform the operation in S201.

S206: Feed back that the voice assistant is successfully woken up.

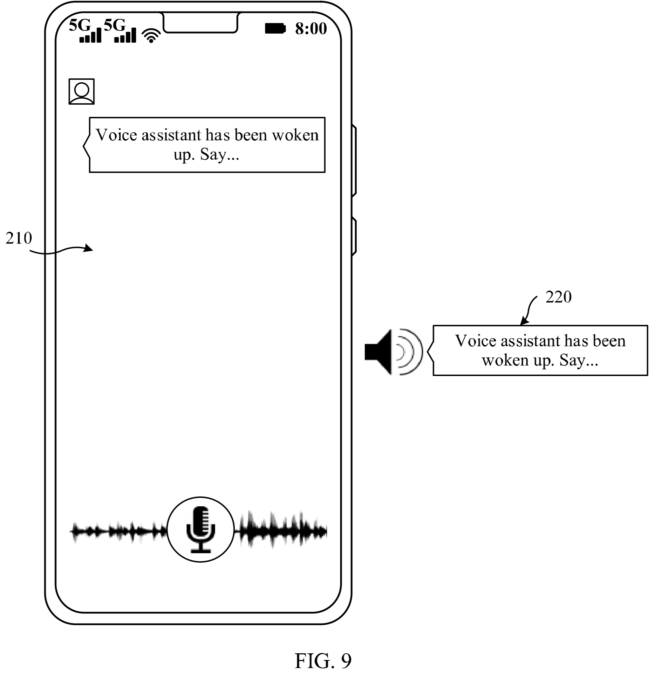

In some examples, as shown in FIG. 9, the electronic device may display first prompt information 210 through a display. The first prompt information 210 may also be referred to as a first prompt picture 210, the first prompt information 210 indicates that the voice assistant is successfully woken up, and the first prompt information 210 may include text information, light information (or referred to as light effect information), and/or the like.

In some examples, as shown in FIG. 9, the electronic device may play a first prompt audio 220 through the lower speaker, and the first prompt audio 220 indicates that the voice assistant is successfully woken up.

In some examples, the electronic device may send prompt information through both the display and the lower speaker, to indicate that the voice assistant is successfully woken up.

The electronic device may alternatively indicate, in another manner, for example, by using vibration information, that the voice assistant is successfully woken up. The electronic device may alternatively change a feedback manner based on a user-defined operation. This is not limited in this application.

When the electronic device is in the first target posture, in a manner of displaying the prompt information through the display and/or playing audio prompt information through the lower speaker, the prompt information can be more easily perceived by the user. This feedback manner makes interaction between the user and the voice assistant feel more intuitive, and enhances usability of the voice assistant.

S207: Determine, based on a dual-channel audio feature, that the user speaks close to the lower microphone.

To determine that an audio recorded by the microphone is from the user of the electronic device, or to determine that the user of the electronic device is speaking, in some examples, the electronic device may perform recording through the upper microphone and the lower microphone while feeding back that the voice assistant is successfully woken up, and determine, based on the dual-channel audio feature, that the user is speaking close to the lower microphone.

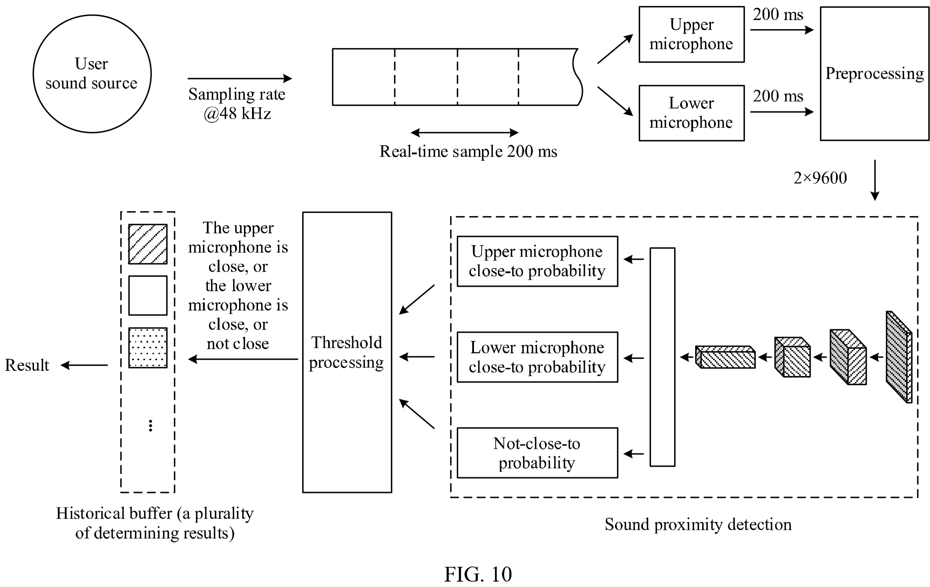

In some examples, the electronic device may determine, based on audio information recorded by the upper microphone and the lower microphone, that the user is speaking close to the lower microphone. FIG. 10 shows a manner of determining, based on audio information recorded by an upper microphone and a lower microphone, that a user is speaking close to the lower microphone according to an embodiment of this application.

For example, the electronic device may store an audio signal whose length is 200 ms, and perform determining once every 100 ms. A plurality of determining results may be stored as a historical buffer. In some examples, the electronic device may separate audios respectively recorded by the upper microphone and the lower microphone, and remove a signal in an ultrasonic band by using a low-pass filter whose cut-off frequency is 17 kHz. Then, a dual-channel audio signal is used as an input of a CNN-based classifier, and a classification result output by the classifier is used to determine whether the user is speaking close to the lower microphone of the electronic device.

For example, the output result of the CNN-based classifier may provide probabilities of the following three cases, and in a case in which a probability is greater than or equal to a preset threshold, that the user is speaking close to the lower microphone of the electronic device is considered to be detected.

Classification 1: The upper microphone of the electronic device is close to the mouth of the user. For example, a distance between the upper microphone of the electronic device and the mouth of the user is within 5 centimeters, and the user holds the electronic device and speaks.

Classification 2: The lower microphone of the electronic device is close to the mouth of the user. For example, a distance between the lower microphone of the electronic device and the mouth of the user is within 5 centimeters, and the user holds the electronic device and speaks.

Classification 3: The electronic device is not close to the mouth of the user, and this case is also referred to as another case. For example, the user normally uses the electronic device, for example, looks at a screen to speak. For another example, the user speaks in an environment in which another person is around the user, the user speaks in a quiet environment, or the user speaks in a noisy environment.

In some examples, the electronic device may further store latest n determining results, vote for different types of results in the latest n determining results by using a voting mechanism, and consider a majority voting result as a final output, where n is an integer greater than or equal to 1.

S208: Select a microphone based on a sound pickup policy, and perform automatic speech recognition.

When the lower microphone of the electronic device is close to the mouth of the user, the electronic device may record a voice command of the user through at least the lower microphone, for example, perform a sound pickup policy in which the lower microphone is a main microphone and the upper microphone is an auxiliary microphone. For example, the electronic device may perform, by using an audio recorded by the upper microphone, auxiliary noise reduction on an audio recorded by the lower microphone.

S209: The voice assistant of the electronic device executes the command, and generates a feedback in a corresponding feedback manner.

After invoking a voice assistant to execute the command, the electronic device may feed back a command execution result in a manner similar to a manner of feeding back that the voice assistant is successfully woken up in S206. For details, refer to content in S206. For brevity, details are not described herein again.

In some examples, the electronic device may use different feedback manners for different execution results, for example, feedback manners of different types, or feedback manners for different content of a same type. This is not limited in this application.

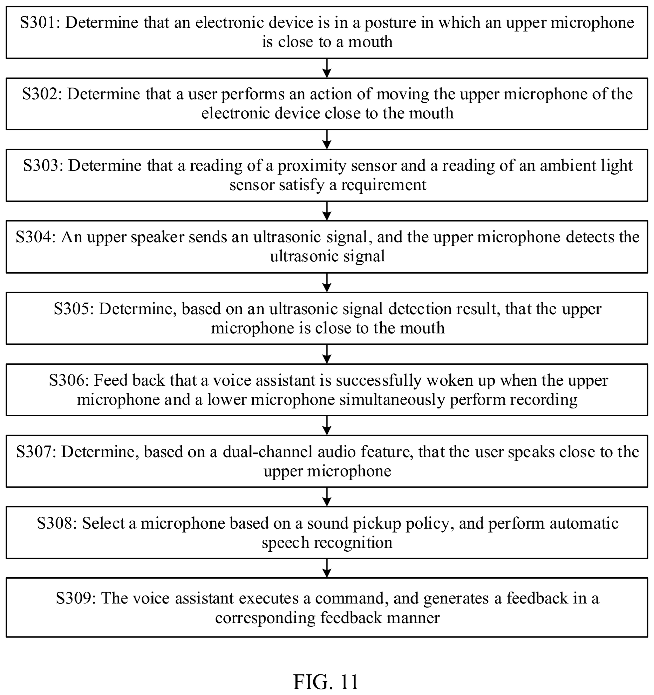

FIG. 11 shows a method for interaction between a user and a voice assistant when an electronic device is in a case in which an upper microphone is close to a mouth of the user (the posture of the electronic device 100 in figure 403).

S301: Determine that the electronic device is in a posture in which the upper microphone is close to the mouth of the user.

In some examples, in a relatively stable state, the electronic device determines whether the electronic device is in the posture in which the upper microphone is close to the mouth of the user.

Whether the electronic device is in the relatively stable state may be determined based on one or more sensors on the electronic device. For example, the electronic device may perform determining based on measurement data of an IMU.

In some examples, the posture of the electronic device may be determined based on the one or more sensors on the electronic device. For example, the electronic device may determine the posture of the electronic device based on measurement data of a gravity sensor. For example, the electronic device may determine components of a gravity acceleration of the electronic device on three axes of the electronic device based on the measurement data of the gravity sensor, and determine included angles between the three axes of the electronic device and a horizontal plane based on the components of the gravity acceleration on the three axes, where the included angles may indicate the posture of the electronic device. For ease of description, in the following content, "the electronic device is in a posture in which the upper microphone is close to the mouth of the user" is referred to as a third target posture.

The three-dimensional diagram of the electronic device shown in FIG. 6 is used as an example. The included angles between the x-axis, the y-axis, and the z-axis of the electronic device and the horizontal plane may be respectively referred to as the first included angle (α1), the second included angle (α2), and the third included angle (α3). In some examples, when the first included angle, the second included angle, and the third included angle all satisfy a preset condition, the electronic device may determine that the electronic device is in the third target posture. On the contrary, when any one of the first included angle, the second included angle, and the third included angle does not satisfy the preset condition, the electronic device may determine that the electronic device is not in the third target posture.

A specific execution method of S301 is similar to that of S201. For details, refer to related content in S201. For brevity, details are not described herein again.

S302: Determine that the user performs an action of moving the upper microphone of the electronic device close to the mouth.

To improve accuracy of determining, by the electronic device, that the user intends to wake up the voice assistant, lower a probability that the voice assistant of the electronic device is accidentally woken up, and reduce a power consumption increase caused by using the voice assistant, when determining that the electronic device is in the third target posture, the electronic device may determine whether the electronic device changes from a non-third target posture to the third target posture. In other words, the electronic device may determine whether the user adjusts the electronic device from the non-third target posture to the third target posture. For ease of description, an action of "adjusting the electronic device from the non-third target posture to the third target posture" is referred to as a third target action below.

In some examples, the electronic device may store data of a sensor within a period of time, and determine, based on the data of the sensor within the period of time, whether the user performs the third target action. For example, the electronic device may continuously store the measurement data of the IMU within specific duration (for example, 2 seconds or 1 second), and determine, based on the measurement data of the IMU within the duration range, whether the user performs the foregoing action.

For example, based on the measurement data of the IMU within the duration range, the electronic device may determine, by using a machine learning-based classification algorithm and/or a rule-based determining algorithm, whether the user performs the third target action.

The machine learning-based classification algorithm may include one or more of a conventional machine learning method like a nearest neighbors algorithm, a support vector machine, or a random forest, a deep learning method like a convolutional neural network or an autoencoder, and the like.

In some examples, the electronic device obtains a probability value of "detecting the third target action" by using one or more of the foregoing classification algorithms. When the probability value is greater than or equal to a preset threshold, the electronic device determines that the user performs the third target action, and continues to perform S303 and subsequent operations. When the probability value is less than the preset threshold, the electronic device determines that the user does not perform the third target action, and may restart to perform S301.

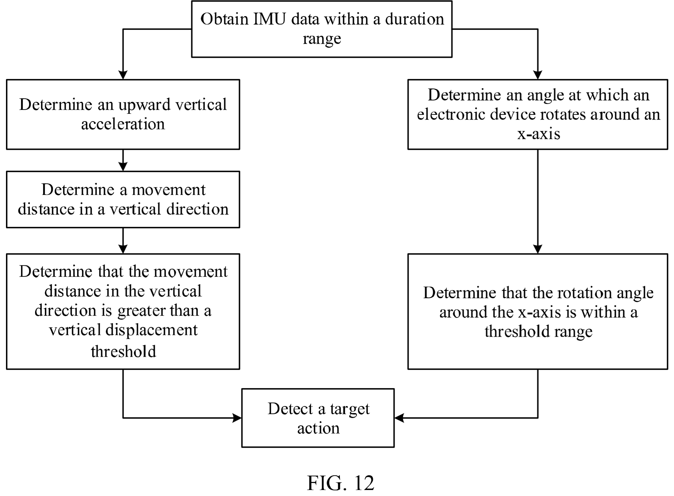

For the rule-based determining algorithm, the electronic device may determine, based on a movement distance of the electronic device in a vertical direction and/or an angle at which the electronic device rotates around the x-axis, whether the third target action is detected. FIG. 12 shows an example of a method for determining, by an electronic device, whether a third target action is detected.

In some examples, the electronic device may determine whether the movement distance of the electronic device in the vertical direction is greater than a vertical displacement threshold, and determine, when determining that the movement distance in the vertical direction is greater than or equal to the vertical displacement threshold, that the third target action is detected, or determine, when determining that the movement distance in the vertical direction is less than the vertical displacement threshold, that the third target action is not detected.

In some examples, the electronic device may determine whether the angle at which the electronic device rotates around the x-axis is greater than an angle threshold, and determine, when determining that the angle at which the electronic device rotates around the x-axis is greater than or equal to the angle threshold, that the third target action is detected, or determine, when determining that the angle at which the electronic device rotates around the x-axis is less than the angle threshold, that the third target action is not detected.

S303: Determine that measurement data of a proximity sensor and measurement data of an ambient light sensor satisfy a requirement.

In some examples, when the upper microphone of the electronic device is close to the mouth of the user, the proximity sensor is blocked, and a reading of the ambient light sensor decreases, in other words, a distance detected by the proximity sensor is less than or equal to a distance threshold, and illuminance detected by the ambient light sensor is less than or equal to an illuminance threshold. In other words, when both a reading of the proximity sensor and the measurement data of the ambient light sensor satisfy the preset condition, there is a higher probability that the electronic device is in the posture in which the upper microphone is close to the mouth of the user. On the contrary, if one or two of the detection data of the proximity sensor and the measurement data of the ambient light sensor do not satisfy the preset condition, there is a lower possibility that the electronic device is in the posture in which the upper microphone is close to the mouth of the user. For example, in this case, the electronic device may be in a pocket or a handbag.

When it is determined that the measurement data of the proximity sensor and the measurement data of the ambient light sensor satisfy the requirement, the electronic device may perform S304 and subsequent operations. When it is determined that the measurement data of the proximity sensor and/or the measurement data of the ambient light sensor do/does not satisfy the requirement, the electronic device may re-perform the operation of S301.

S304: An upper speaker of the electronic device sends an ultrasonic signal, and the upper microphone detects the ultrasonic signal.

When determining that the electronic device is in the third target posture, and the electronic device detects the third target action, the electronic device may perform S304, that is, control the upper speaker to send the ultrasonic signal, and control the upper microphone to detect the ultrasonic signal.

When it is determined that the electronic device is not in the third target posture, or when the electronic device does not detect the third target action, the electronic device may re-perform the operation in S301.

S305: Determine a distance between the upper microphone and the mouth of the user, and obtain feature information of the mouth of the user.

A current distance between the upper microphone of the electronic device and the mouth of the user is determined based on a result of detecting the ultrasonic signal by the upper microphone in S304, and the feature information of the mouth of the user is obtained. Because distances between different points of the mouth of the user and the microphone are different, different points have different effects on reflection, absorption, or the like of the ultrasonic signal. After the ultrasonic signal is reflected by the mouth of the user, the information is included in an audio clip of a microphone mobile phone. In other words, the feature information of the mouth of the user may mean that a spectrum graph of the ultrasonic signal detected by the microphone after the ultrasonic signal is blocked and reflected by the mouth of the user includes the feature information of the mouth of the user.

The electronic device sends a chirp signal of a preset frequency and preset duration, records an audio of specific duration, performs filtering processing on the recorded audio, and captures a spectrum graph of an audio clip in the recorded audio as an input of a classifier. An output result of the classifier may be used to determine a distance between a lower microphone of the electronic device and a mouth of a user. Herein, the classifier may be an RNN, a CNN, an SVM, or the like.

A specific execution method of S305 is similar to that of S205. For details, refer to related content in S205. For brevity, details are not described herein again.

When it is determined, by using the ultrasonic signal, that the upper microphone of the electronic device is close to the mouth of the user, the electronic device may perform S306, that is, after a voice assistant application is started, feed back that the voice assistant is successfully woken up. On the contrary, if the ultrasonic signal does not indicate that the upper microphone of the electronic device is close to the mouth of the user, the electronic device may re-perform the operation in S301.

S306: Feed back that the voice assistant is successfully woken up.

In some examples, the electronic device may display second prompt information through a display. The second prompt information may also be referred to as a second prompt picture, the second prompt information indicates that the voice assistant is successfully woken up, and the second prompt information may be text information, light information (or referred to as light effect information), or the like.

In some examples, the electronic device may play a third prompt audio through the upper speaker, and the third prompt audio indicates that the voice assistant is successfully woken up.

In some examples, the electronic device may send prompt information through both the display and the upper speaker, to indicate that the voice assistant is successfully woken up.

The electronic device may alternatively indicate, in another manner, for example, by using vibration information, that the voice assistant is successfully woken up. The electronic device may alternatively change a feedback manner based on a user-defined operation. This is not limited in this application.

When the electronic device is in the third target posture, in a manner of playing audio prompt information through the upper speaker, the prompt information can be more easily perceived by the user. This feedback manner makes interaction between the user and the voice assistant feel more intuitive, and enhances usability of the voice assistant.

S307: Determine, based on a dual-channel audio feature, that the user speaks close to the upper microphone.

To determine that an audio recorded by the microphone is from the user of the electronic device, or to determine that the user of the electronic device is speaking, in some examples, the electronic device may perform recording through both the upper microphone and the lower microphone while feeding back that the voice assistant is successfully woken up, and determine, based on the dual-channel audio feature, that the user is speaking close to the upper microphone.

In some examples, the electronic device may determine, based on audio information recorded by the upper microphone and the lower microphone, that the user is speaking close to the upper microphone.

For example, the electronic device may store an audio signal whose length is 200 ms, and perform determining once every 100 ms. A plurality of determining results may be stored as a historical buffer. In some examples, the electronic device may separate audios respectively recorded by the upper microphone and the lower microphone, and remove a signal in an ultrasonic band by using a low-pass filter whose cut-off frequency is 17 kHz. Then, a dual-channel audio signal is used as an input of a CNN-based classifier, and a classification result output by the classifier is used to determine whether the user is speaking close to the upper microphone of the electronic device.

In some examples, the electronic device may further store latest n output results, vote for different types of results in the latest n output results by using a voting mechanism, and consider a majority voting result as a final output, where n is an integer greater than or equal to 1.

A specific execution method of S307 is similar to that of S207. For details, refer to related content in S207. For brevity, details are not described herein again.

S308: Select a microphone based on a sound pickup policy, and perform automatic speech recognition.

When the upper microphone of the electronic device is close to the mouth of the user, the electronic device may record a voice command of the user through at least the upper microphone, for example, perform a sound pickup policy in which the upper microphone is a main microphone and the lower microphone is an auxiliary microphone. For example, the electronic device may perform, by using an audio recorded by the lower microphone, auxiliary noise reduction on an audio recorded by the upper microphone.

S309: The voice assistant of the electronic device executes the command, and generates a feedback in a corresponding feedback manner.

After invoking a voice assistant to execute the command, the electronic device may feed back, in a manner similar to a manner of feeding back that the voice assistant is successfully woken up in S306, that command execution is completed. For details, refer to content in S306. For brevity, details are not described herein again.

In some examples, the electronic device may use different feedback manners for different execution results, for example, feedback manners of different types, or feedback manners for different content of a same type. This is not limited in this application.

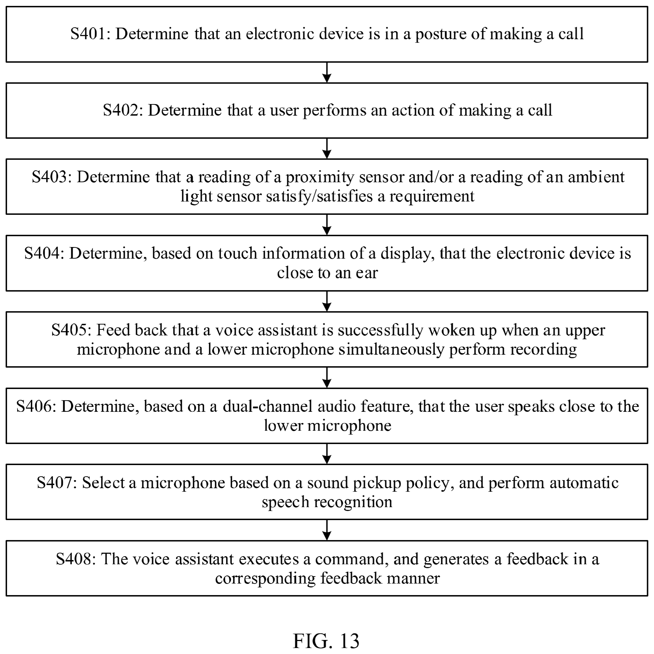

FIG. 13 shows still another voice assistant interaction method according to an embodiment of this application. In the method, an electronic device may determine, based on a sensor of the electronic device, that the electronic device is in a posture of answering or making a call (the posture of the electronic device 100 in figure 402), to perform a corresponding wake-up solution, a corresponding sound pickup solution, and a corresponding feedback solution based on the posture.

S401: Determine that the electronic device is in the posture of answering or making a call.

In some examples, in a relatively stable state, the electronic device may determine whether the electronic device is in the posture of answering or making a call.

Whether the electronic device is in the relatively stable state may be determined based on one or more sensors on the electronic device. For example, the electronic device may perform determining based on measurement data of an IMU. For example, the electronic device may determine a value of a current acceleration of the electronic device based on the measurement data of the IMU. When the acceleration of the electronic device is less than or equal to an acceleration threshold, the electronic device may determine that the electronic device is in the relatively stable state. On the contrary, when the acceleration of the electronic device is greater than the acceleration threshold, the electronic device may determine that the electronic device is in a motion state.

It should be noted that the relatively stable state herein may also be understood as a relatively static state, and the stable state, the static state, and the motion state are all relative descriptions.

In some examples, the posture of the electronic device may be determined based on the one or more sensors on the electronic device. For example, the electronic device may determine the posture of the electronic device based on measurement data of a gravity sensor. For example, the electronic device may determine components of a gravity acceleration of the electronic device on three axes of the electronic device based on the measurement data of the gravity sensor, and determine included angles between the three axes of the electronic device and a horizontal plane based on the components of the gravity acceleration on the three axes, where the included angles may indicate the posture of the electronic device. For ease of description, in the following content, "the electronic device is in the posture of answering or making a call" is referred to as a second target posture.

The three-dimensional diagram of the electronic device shown in FIG. 6 is used as an example. The included angles between the x-axis, the y-axis, and the z-axis of the electronic device and the horizontal plane 601 may be respectively referred to as the first included angle (α1), the second included angle (α2), and the third included angle (α3). In some examples, when the first included angle, the second included angle, and the third included angle all satisfy a preset condition, the electronic device may determine that the electronic device is in the second target posture. On the contrary, when any one of the first included angle, the second included angle, and the third included angle does not satisfy the preset condition, the electronic device may determine that the electronic device is not in the second target posture.

S402: Determine that a user performs an action of moving the electronic device close to an ear.

To improve accuracy of determining, by the electronic device, that the user intends to wake up a voice assistant, lower a probability that the voice assistant of the electronic device is accidentally woken up, and reduce a power consumption increase caused by using the voice assistant, when determining that the electronic device is in the posture of answering or making a call, the electronic device may determine whether the electronic device changes from a non-second target posture to the second target posture. In other words, the electronic device may determine whether the user performs an action of adjusting the electronic device from the non-second target posture to the second target posture. For ease of description, the action of "adjusting the electronic device from the non-second target posture to the second target posture" is referred to as a second target action below.

In some examples, the electronic device may store data of a sensor within a period of time, and determine, based on the data of the sensor within the period of time, whether the user performs the second target action. For example, the electronic device may continuously store the measurement data of the IMU within specific duration (for example, 2 seconds or 1 second), and determine, based on the measurement data of the IMU within the duration range, whether the user performs the foregoing action.

For example, based on the measurement data of the IMU within the duration range, the electronic device may determine, by using a machine learning-based classification algorithm and/or a rule-based determining algorithm, whether the user performs the second target action.

The machine learning-based classification algorithm may include one or more of a conventional machine learning method like a nearest neighbors algorithm, a support vector machine, or a random forest, a deep learning method like a convolutional neural network or an autoencoder, and the like.

In some examples, the electronic device obtains a probability value of "detecting the second target action" by using one or more of the foregoing classification algorithms. When the probability value is greater than or equal to a preset threshold, the electronic device determines that the user performs the second target action, and continues to perform S403 and subsequent operations. When the probability value is less than the preset threshold, the electronic device determines that the user does not perform the second target action, and may restart to perform S401.

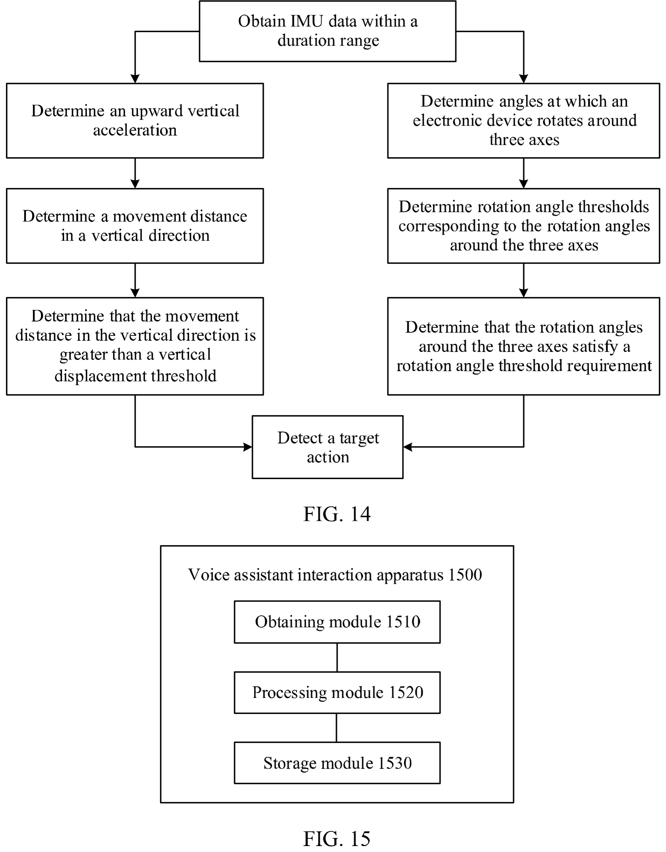

For the rule-based determining algorithm, the electronic device may determine, based on a movement distance of the electronic device in a vertical direction and/or angles at which the electronic device rotates around the three axes (the x-axis, the y-axis, and the z-axis), whether the target action is detected. FIG. 14 shows an example of a method for determining, by an electronic device, whether a second target action is detected.

In some examples, the electronic device may determine whether the movement distance of the electronic device in the vertical direction is greater than a vertical displacement threshold, and determine, when determining that the movement distance in the vertical direction is greater than or equal to the vertical displacement threshold, that the second target action is detected, or determine, when determining that the movement distance in the vertical direction is less than the vertical displacement threshold, that the second target action is not detected.

In some examples, the electronic device may determine whether the angles at which the electronic device rotates around the three axes are greater than angle thresholds, and determine, when determining that the angles at which the electronic device rotates around the three axes are greater than or equal to the angle thresholds, that the second target action is detected, or determine, when determining that the angles at which the electronic device rotates around the three axes are less than the angle thresholds, that the second target action is not detected.

For example, the rotation angles of the electronic device around the x-axis, the y-axis, and the z-axis are respectively a first rotation angle (θ1), a second rotation angle (θ2), and a third rotation angle (θ3). Rotation angle thresholds corresponding to the first rotation angle, the second rotation angle, and the third rotation angle are respectively a first rotation angle threshold (σ1), a second rotation angle threshold (σ2), and a third rotation angle threshold (σ3). When θ1≥σ1, θ2≥σ2, and θ3≥σ3, the electronic device determines that the second target action is detected. When any one of the three rotation angles does not satisfy the foregoing condition, the electronic device determines that the second target action is not detected.

For example, when θ1≥σ1, θ2≥σ2, and θ3≥σ3, the electronic device may determine that the electronic device is located near a left ear of the user, in other words, the electronic device may determine that the user performs an action of placing the electronic device near the left ear.

For another example, when θ1≥σ1, θ2≤-σ2, and θ3≤-σ3, the electronic device may determine that the electronic device is located near a right ear of the user, in other words, the electronic device may determine that the user performs an action of placing the electronic device near the right ear.

S403: Determine that measurement data of a proximity sensor and/or measurement data of an ambient light sensor satisfy/satisfies a requirement.

In most cases, the proximity sensor is triggered when a call is answered or made. In a few cases, the proximity sensor is not triggered. In this case, whether the mobile phone is close to the ear may be determined based on whether a reading of the ambient light sensor decreases. If the foregoing condition is not satisfied, it is determined that the action of answering or making a call is not detected.

In some examples, the electronic device may determine, based on an event of triggering the proximity sensor, that the second target action is detected. For example, in a motion process of the electronic device, if a distance determined based on the measurement data of the proximity sensor is less than or equal to a distance threshold, the electronic device determines that the second target action is detected; or if the distance determined based on the measurement data of the proximity sensor is greater than the distance threshold, the electronic device determines that the second target action is not detected.

In some examples, the electronic device may determine, based on whether a measurement value of the ambient light sensor decreases in the motion process of the electronic device, whether the electronic device is close to the ear, that is, determine whether the second target action is detected. For example, in the motion process of the electronic device, if the measurement value of the ambient light sensor decreases, it is determined that the second target action is detected. On the contrary, if the measurement value of the ambient light sensor does not decrease, it is determined that the second target action is not detected.

In some examples, the electronic device may alternatively determine, based on the measurement data of the proximity sensor and the measurement data of the ambient light sensor, whether the second target action is detected. For example, when both the measurement data of the proximity sensor and the measurement data of the ambient light sensor fall within a preset threshold range, the electronic device determines that the second target action is detected. Otherwise, the electronic device determines that the second target action is not detected.

S404: Determine that the electronic device is close to the ear of the user.

When the electronic device is close to the ear, because an external pinna is in contact with a screen of the electronic device, a capacitive screen reading of the electronic device changes. In this case, a shape of the pinna can be recognized based on the capacitive screen reading.

In some examples, the capacitive screen reading may be represented by using a twodimensional matrix. Generally, a point with a large value represents an area in contact with skin. Whether the electronic device is close to the ear of the user may be determined based on the capacitive screen reading. For example, the electronic device may analyze the capacitive screen reading by using a machine learning-based method like a kNN, an SVM, or a CNN, to determine whether the capacitive screen reading includes target data, where the target data indicates the shape of the external pinna, in other words, the target data includes information about the external pinna of the user, so as to determine whether the electronic device is close to the ear of the user.

In some scenarios, determining, based on whether the capacitive screen reading includes the target data, whether the electronic device is close to the ear of the user may also be understood as determining, based on touch information of a display of the electronic device, whether the electronic device is close to the ear of the user. For example, the touch information may include a capacitance value of the display of the electronic device, and the capacitance value may indicate the information about the external pinna of the user.

When it is determined, based on the touch information, that the electronic device is close to the ear of the user, the electronic device may perform S405, that is, after a voice assistant application is started, feed back that the voice assistant is successfully woken up. On the contrary, if the touch information does not indicate that the electronic device is close to the ear of the user, the electronic device may re-perform the operation in S401.

S405: Feed back that the voice assistant is successfully woken up.

In some examples, the electronic device may play a second prompt audio through a lower speaker, and the second prompt audio indicates that the voice assistant is successfully woken up.

The electronic device may alternatively indicate, in another manner, for example, by using vibration information, that the voice assistant is successfully woken up. The electronic device may alternatively change a feedback manner based on a user-defined operation. This is not limited in this application.

When the electronic device is in the second target posture, in a manner of playing audio prompt information through the lower speaker, the prompt information can be more easily perceived by the user. This feedback manner makes interaction between the user and the voice assistant feel more intuitive, and enhances usability of the voice assistant.

S406: Determine, based on a dual-channel audio feature, that the user speaks close to a lower microphone.

To determine that an audio recorded by the microphone is from the user of the electronic device, or to determine that the user of the electronic device is speaking, in some examples, the electronic device may perform recording through both an upper microphone and the lower microphone while feeding back that the voice assistant is successfully woken up, and determine, based on the dual-channel audio feature, that the user is speaking close to the lower microphone.

In some examples, the electronic device may determine, based on audio information recorded by the upper microphone and the lower microphone, that the user is speaking close to the lower microphone. FIG. 10 shows a manner of determining, based on audio information recorded by an upper microphone and a lower microphone, that a user is speaking close to the lower microphone according to an embodiment of this application.

For example, the electronic device may store an audio signal whose length is 200 ms, and perform determining once every 100 ms. A plurality of determining results may be stored as a historical buffer. In some examples, the electronic device may separate audios respectively recorded by the upper microphone and the lower microphone, and remove a signal in an ultrasonic band by using a low-pass filter whose cut-off frequency is 17 kHz. Then, a dual-channel audio signal is used as an input of a CNN-based classifier, and a classification result output by the classifier is used to determine whether the user is speaking close to the lower microphone of the electronic device.

In some examples, the electronic device may further store latest n output results, vote for different types of results in the latest n output results by using a voting mechanism, and consider a majority voting result as a final output, where n is an integer greater than or equal to 1.

A specific execution method of S406 is similar to that of S207. For details, refer to related content in S207. For brevity, details are not described herein again.

S407: Select a microphone based on a sound pickup policy, and perform automatic speech recognition.

When the electronic device is in the posture of answering or making a call, the electronic device may record a voice command of the user through at least the lower microphone, for example, perform a sound pickup policy in which the lower microphone is a main microphone and the upper microphone is an auxiliary microphone. For example, the electronic device may perform, by using an audio recorded by the upper microphone, auxiliary noise reduction on an audio recorded by the lower microphone.

S408: The voice assistant executes the command, and generates a feedback in a corresponding feedback manner.

After invoking a voice assistant to execute the command, the electronic device may feed back, in a manner similar to a manner of feeding back that the voice assistant is successfully woken up in S405, that command execution is completed. For details, refer to content in S405. For brevity, details are not described herein again.

In some examples, the electronic device may use different feedback manners for different execution results, for example, feedback manners of different types, or feedback manners for different content of a same type. This is not limited in this application.

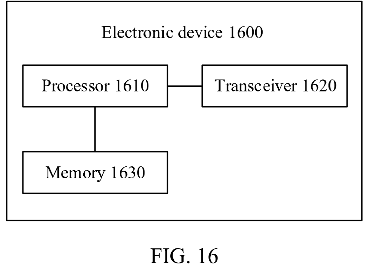

The foregoing describes the method embodiments in embodiments of this application in detail with reference to FIG. 1 to FIG. 14. The following describes apparatus embodiments in embodiments of this application with reference to FIG. 15 and FIG. 16. It should be understood that descriptions of the method embodiments correspond to descriptions of the apparatus embodiments. Therefore, for a part that is not described in detail, refer to the foregoing method embodiments.

FIG. 15 shows a voice assistant interaction apparatus 1500 according to an embodiment of this application. The apparatus 1500 may have functions of the electronic device in the foregoing method embodiments, and may be configured to perform steps performed by the functions of the electronic device in the foregoing method embodiments. The function may be implemented by hardware, or may be implemented by software or hardware executing corresponding software. The hardware or the software includes one or more modules corresponding to the function.

In a possible implementation, the voice assistant interaction apparatus 1500 may include an obtaining module 1510 and a processing module 1520. The obtaining module 1510 and the processing module 1520 are coupled to each other.

The obtaining module 1510 may be configured to support the electronic device in obtaining an input of a user, for example, performing an operation like recording audio information in FIG. 3 or the like.

The processing module 1520 is configured to support the electronic device in performing a processing action in the foregoing method embodiments, for example, sending feedback information, determining a device posture, or performing a device action.

Optionally, the voice assistant interaction apparatus 1500 may further include a storage unit 1530, configured to store program code and data of the voice assistant interaction apparatus 1500.

FIG. 16 shows an electronic device 1600 according to an embodiment of this application. As shown in the figure, the electronic device 1600 includes at least one processor 1610 and a transceiver 1620. The processor 1610 is coupled to a memory, and is configured to execute instructions stored in the memory, to control the transceiver 1620 to send a signal and/or receive a signal.

Optionally, the electronic device 1600 further includes a memory 1630, configured to store instructions.

In some embodiments, the processor 1610 and the memory 1630 may be integrated into a processing apparatus. The processor 1610 is configured to execute program code stored in the memory 1630, to implement the foregoing functions. During specific implementation, the memory 1630 may alternatively be integrated into the processor 1610 or independent of the processor 1610.

In some embodiments, the transceiver 1620 may include a receiver (or referred to as a receiving machine) and a transmitter (or referred to as a transmitting machine).

The transceiver 1620 may further include an antenna, and there may be one or more antennas. The transceiver 1620 may be a communication interface or an interface circuit.

When the electronic device 1600 is a chip, the chip includes a transceiver module and a processing module. The transceiver module may be an input/output circuit or a communication interface. The processing module may be a processor, a microprocessor, or an integrated circuit integrated on the chip.

An embodiment further provides a computer-readable storage medium. The computer-readable storage medium stores computer instructions. When the computer instructions are run on an electronic device, the electronic device is enabled to perform the foregoing related method steps, to implement the voice assistant interaction method in the foregoing embodiments.

An embodiment further provides a computer program product. When the computer program product runs on a computer, the computer is enabled to perform the foregoing related steps, to implement the voice assistant interaction method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the voice assistant interaction method in the foregoing method embodiments.

The electronic device, the computer-readable storage medium, the computer program product, or the chip provided in embodiments is configured to perform the corresponding method provided above. Therefore, for beneficial effects that can be achieved, refer to the beneficial effects in the corresponding methods provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A voice assistant interaction method, applied to an electronic device and comprising:
detecting a target action of the electronic device, and determining that the electronic device is in a target posture, wherein the target posture comprises a posture in which a lower microphone of the electronic device is close to a mouth of a user, and the target action comprises an action used to convert the electronic device from a non-target posture to the target posture;
displaying and/or playing first feedback information in response to the target posture of the electronic device, wherein the first feedback information indicates that a voice assistant is successfully woken up;
recording a voice instruction through at least the lower microphone of the electronic device; and
displaying and/or playing second feedback information in response to the voice instruction, wherein the second feedback information indicates an execution result of the voice instruction.

2. The method according to claim 1, wherein the target posture comprises a posture in which the lower microphone is close to the mouth of the user and an ambient light sensor and/or a proximity sensor are/is not blocked; and
displaying and/or playing the first feedback information in response to the target posture of the electronic device comprises:
displaying a prompt picture and/or playing a first prompt audio through a lower speaker of the electronic device in response to the target posture of the electronic device, wherein the first feedback information comprises the prompt picture and/or the first prompt audio.

3. The method according to claim 2, wherein displaying the prompt picture and/or playing the first prompt audio through the lower speaker of the electronic device in response to the target posture of the electronic device comprises:
sending a first ultrasonic signal in response to the target posture of the electronic device;
receiving a second ultrasonic signal returned based on the first ultrasonic signal; and
when the second ultrasonic signal indicates that the electronic device is in the target posture, displaying the prompt picture and/or playing the first prompt audio through the lower speaker of the electronic device.

4. The method according to claim 3, wherein
sending the first ultrasonic signal in response to the target posture of the electronic device comprises:
sending the first ultrasonic signal through the lower speaker in response to the target posture of the electronic device; and
receiving the second ultrasonic signal returned based on the first ultrasonic signal comprises:
receiving the second ultrasonic signal through the lower microphone in response to the second ultrasonic signal returned when the first ultrasonic signal is in contact with the user.

5. The method according to claim 1, wherein the target posture comprises a posture in which the lower microphone of the electronic device is close to the mouth of the user and an ambient light sensor and/or a proximity sensor are/is blocked; and
displaying and/or playing the first feedback information in response to the target posture of the electronic device comprises:
playing a second prompt audio through an upper speaker of the electronic device in response to the target posture of the electronic device, wherein the first feedback information comprises the second prompt audio.

6. The method according to claim 5, wherein playing the second prompt audio through the upper speaker of the electronic device in response to the target posture of the electronic device comprises:
obtaining touch information of a display of the electronic device in response to the target posture of the electronic device; and
when the touch information indicates that the display of the electronic device is touched, playing the second prompt audio through the upper speaker of the electronic device.

7. The method according to claim 6, wherein the touch information comprises information about an external pinna.

8. The method according to any one of claims 1 to 7, wherein recording the voice instruction through at least the lower microphone of the electronic device comprises: recording the voice instruction by using the lower microphone of the electronic device as a main recording unit and an upper microphone of the electronic device as an auxiliary recording unit.

9. The method according to claim 8, wherein before recording the voice instruction by using the lower microphone of the electronic device as the main recording unit and the upper microphone of the electronic device as the auxiliary recording unit, the method further comprises:
recording a first audio through the upper microphone and the lower microphone; and
determining, based on the first audio, that the user speaks close to the lower microphone.

10. A voice assistant interaction method, applied to an electronic device and comprising:
detecting a target action of the electronic device, and determining that the electronic device is in a target posture, wherein the target posture comprises a posture in which an upper microphone of the electronic device is close to a mouth of a user, and the target action comprises an action used to convert the electronic device from a non-target posture to the target posture;
playing first feedback information in response to the target posture of the electronic device, wherein the first feedback information indicates that a voice assistant is successfully woken up;
recording a voice instruction through at least the upper microphone of the electronic device; and
playing second feedback information in response to the voice instruction, wherein the second feedback information indicates an execution result of the voice instruction.

11. The method according to claim 10, wherein playing the first feedback information in response to the target posture of the electronic device comprises:
playing the first feedback information through an upper speaker of the electronic device in response to the target posture of the electronic device.

12. The method according to claim 11, wherein playing the first feedback information through the upper speaker of the electronic device in response to the target posture of the electronic device comprises:
sending a first ultrasonic signal in response to the target posture of the electronic device;
receiving a second ultrasonic signal returned based on the first ultrasonic signal; and
when the second ultrasonic signal indicates that the electronic device is in the target posture, playing the first feedback information through the upper speaker of the electronic device.

13. The method according to claim 12, wherein
sending the first ultrasonic signal in response to the target posture of the electronic device comprises:
sending the first ultrasonic signal through the upper speaker in response to the target posture of the electronic device; and
receiving the second ultrasonic signal returned based on the first ultrasonic signal comprises:
receiving the second ultrasonic signal through the upper microphone in response to the second ultrasonic signal returned when the first ultrasonic signal is in contact with the user.

14. The method according to any one of claims 10 to 13, wherein recording the voice instruction through at least the upper microphone of the electronic device comprises: recording the voice instruction by using the upper microphone of the electronic device as a main recording unit and a lower microphone of the electronic device as an auxiliary recording unit.

15. The method according to any one of claims 10 to 14, wherein before recording the voice instruction by using the upper microphone of the electronic device as the main recording unit and the lower microphone of the electronic device as the auxiliary recording unit, the method further comprises:
recording a first audio through the upper microphone and the lower microphone; and
determining, based on the first audio, that the user speaks close to the upper microphone.

16. An electronic device, comprising a processor and a memory, wherein the memory is configured to store program instructions, and the processor is configured to invoke the program instructions to perform the method according to any one of claims 1 to 9 or claims 10 to 15.

17. A memory management apparatus, comprising a module configured to implement the method according to any one of claims 1 to 9 or claims 10 to 15.

18. A computer-readable storage medium, wherein the computer-readable storage medium stores a computer program, and when the computer program is executed by a computer, the method according to any one of claims 1 to 9 or claims 10 to 15 is implemented.

19. A chip, comprising a processor and a memory, wherein the processor is configured to read instructions stored in the memory, and when the processor executes the instructions, the chip is enabled to implement the method according to any one of claims 1 to 9 or claims 10 to 15.
